(19) Europäisches Patentamt
European Patent Office
Office européen des brevets

(11) **EP 4 318 075 A1**

(12) **EUROPEAN PATENT APPLICATION**
published in accordance with Art. 153(4) EPC

(43) Date of publication:
07.02.2024 Bulletin 2024/06

(21) Application number: 22781205.4

(22) Date of filing: 30.03.2022

(51) International Patent Classification (IPC):
*G02B 26/12* (2006.01)    *B23K 26/082* (2014.01)
*B23K 26/364* (2014.01)    *G02B 26/10* (2006.01)

(52) Cooperative Patent Classification (CPC):
**B23K 26/082; B23K 26/364; G02B 26/10;
G02B 26/12**

(86) International application number:
**PCT/JP2022/016369**

(87) International publication number:
**WO 2022/210995 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 30.03.2021 JP 2021058353

(71) Applicant: NIPPON STEEL CORPORATION
Chiyoda-ku
Tokyo 100-8071 (JP)

(72) Inventors:
• SAKAI, Tatsuhiko
  Tokyo 100-8071 (JP)
• HAMAMURA, Hideyuki
  Tokyo 100-8071 (JP)

(74) Representative: **Vossius & Partner
Patentanwälte Rechtsanwälte mbB
Siebertstrasse 3
81675 München (DE)**

(54) **LASER SCANNING DEVICE, LASER SCANNING METHOD, LASER PROCESSING DEVICE, AND ELECTRICAL STEEL PLATE MANUFACTURING METHOD**

(57) Provided is a laser scanning device that scans a surface of an electrical steel sheet with a laser beam, and includes: a laser beam output unit which irradiates the laser beam; a polygon mirror which has a polygonal shape including a top surface and a bottom surface that are polygonal, in which at least any one surface excluding the top surface and the bottom surface is formed as a mirror, which rotates about an axis serving as a rotation axis and penetrating the top surface and the bottom surface, and which causes the laser beam irradiated from the laser beam output unit to be reflected at the mirror; and an optical system which guides the laser beam reflected at the polygon mirror to the surface of an electrical steel sheet, the rotation axis of the polygon mirror being parallel to the surface of the electrical steel sheet and substantially parallel to a direction in which the laser beam is scanned.

FIG.1

**Description**

Technical Field

The present disclosure relates to a laser scanning device, a laser scanning method, a laser processing device, and an electrical steel sheet manufacturing method.

Background Art

Conventionally, there have been known laser scanning devices irradiating surfaces of objects with laser beams and scanning the surfaces of the objects with the laser beams to process the surfaces of the objects or modify the surfaces of the objects. Such laser scanning devices include one provided with a laser beam output unit that outputs a laser beam, a polygon mirror that is fixed to a rotation axis and reflects the laser beam output from the laser beam output unit, and an optical system that guides the laser beam reflected at the polygon mirror to a surface of an object, for example, as described in Fig. 2 of Japanese National-Phase Publication (JP-A) No. 2018-507111.

Patent Literature 1: Japanese National-Phase Publication (JP-A) No. 2018-507111

SUMMARY OF INVENTION

By the way, in an electrical steel sheet manufacturing method, magnetic domain control is known in which a strip-shaped steel sheet is continuously passed, and a surface of the steel sheet is scanned and irradiated with a laser beam in substantially parallel with the sheet width direction to form a thermal stress or a groove, thereby improving iron loss. In this manufacturing method, a scanning direction of the laser beam is one direction in the sheet width direction, and a rotating polygon mirror is most suitable as a scanning device of the unidirectional laser beam.

Note that a sheet width of the electrical steel sheet is usually 1000 mm or more, and a scanning width of a laser irradiation device is about 150 to 200 mm. Therefore, five to seven laser irradiation devices are required. When adjacent scanning lines are separated from each other so that a non-laser-irradiated portion is generated in the sheet width direction, the effect of reducing the iron loss greatly decreases. Thus, it is necessary to arrange the laser irradiation devices such that the adjacent irradiation lines have no gap or overlap each other by several mm. At this time, if the entire width of the laser irradiation device is wider than the scanning width of the laser, it is necessary to arrange the laser irradiation device to extend in the sheet passing direction of the sheet in order to make the adjacent scanning lines overlap each other, and thus, there is a problem that equipment is increased in size.

Therefore, it is preferable that the width of the laser scanning line per device is as wide as possible, but in a scanning optical system using reflection of a polygon mirror, there is a problem that power reflection loss of a laser beam having a finite diameter occurs between adjacent mirrors (that is, corners of the mirrors) of the polygon mirror that is a polyhedron. In order to reduce this loss, it is necessary to relatively increase a reflection surface length of the polygon mirror in the circumferential direction with respect to the diameter of the beam incident on the polygon mirror. That is, it is necessary to increase a diameter of the polygon mirror.

Here, in a case in which the rotation axis of the polygon mirror is orthogonal to the laser scanning direction, that is, in a case in which a rotation surface of the polygon mirror is parallel to a scanning surface and the diameter of the polygon mirror is large, the width of the laser irradiation device in the scanning direction becomes larger than the diameter of the polygon mirror, and as a result, the width occupied by the laser scanning device increases. Therefore, it is necessary to arrange the laser irradiation device so as to extend in the sheet passing direction in order to arrange the laser scanning lines on the surface of the electrical steel sheet without any gap in the sheet width direction, and there is a problem that the equipment is increased in size.

The disclosure aims to reduce a width occupied by a laser scanning device as compared with a conventional laser scanning device exemplified by a laser scanning device or the like in which a rotation plane of a polygon mirror is parallel to a surface of an object, and to enable a plurality of laser scanning lines to be arranged compactly in the sheet width direction.

In order to solve the above problem, a laser scanning device according to a first aspect of the disclosure is a laser scanning device that scans a surface of an object with a laser beam, and includes: a laser beam output unit which irradiates the laser beam; a polygon mirror which has a polygonal shape including a top surface and a bottom surface that are polygonal, in which at least any one surface excluding the top surface and the bottom surface is formed as a mirror, which rotates about an axis serving as a rotation axis and penetrating the top surface and the bottom surface, and which causes the laser beam irradiated from the laser beam output unit to be reflected at the mirror; and an optical system which guides the laser beam reflected at the polygon mirror to the surface of the object, the rotation axis of the polygon mirror being parallel to the surface of the object and substantially parallel to a direction in which the laser beam is scanned.

In order to solve the problem, a laser scanning method according to a second aspect of the disclosure is a laser scanning method of scanning a surface of an object with a laser beam, and includes: a laser beam output step of irradiating the laser beam using a laser beam output unit; a reflection step of reflecting the laser beam irradiated from the laser beam output unit at a mirror using a polygon mirror which has a polygonal shape including a top surface and a bottom surface that are polygonal, in which at least any one surface excluding the top surface and the bottom surface is formed as the mirror, and which rotates about an axis serving as a rotation axis and penetrating the top surface and the bottom surface; and a light guiding step of guiding the laser beam reflected at the polygon mirror to the surface of the object using an optical system, the rotation axis of the polygon mirror being parallel to the surface of the object and substantially parallel to a direction in which the laser beam is scanned.

According to the disclosure, it is possible to reduce the width occupied by the laser scanning device as compared with the conventional laser scanning device exemplified by the laser scanning device or the like in which the rotation plane of the polygon mirror is substantially parallel to the surface of the object, and to arrange the plurality of laser scanning lines compactly in the sheet width direction.

BRIEF DESCRIPTION OF DRAWINGS

Fig. 1 is a perspective view of a laser scanning device according to a first embodiment.
Fig. 2 is a plan view of the laser scanning device according to the first embodiment.
Fig. 3 is a view for describing an effective scanning length of a laser beam according to the first embodiment.
Fig. 4 is a plan view of a laser processing device according to the first embodiment.
Fig. 5 is a perspective view of a laser scanning device according to a second embodiment.
Fig. 6 is a plan view of the laser scanning device according to the second embodiment.
Fig. 7 is a plan view of a laser processing device according to the second embodiment.
Fig. 8 is a perspective view of a first rotary member applied to a first modification of the laser scanning device according to the second embodiment.
Fig. 9 is a plan view of the first rotary member applied to the first modification of the laser scanning device according to the second embodiment.
Fig. 10 is a perspective view of a second rotary member applied to a second modification of the laser scanning device according to the second embodiment.
Fig. 11 is a front view of the second rotary member applied to the second modification of the laser scanning device according to the second embodiment.
Fig. 12 is a front view of the second rotary member applied to the second modification of the laser scanning device according to the second embodiment.
Fig. 13 is a plan view of the second rotary member applied to the second modification of the laser scanning device according to the second embodiment.

Fig. 14 is a side view of the second rotary member applied to the second modification of the laser scanning device according to the second embodiment.
Fig. 15 is a perspective view of a laser scanning device according to a third embodiment.
Fig. 16 is a plan view of the laser scanning device according to the third embodiment.
Fig. 17 is a plan view of a laser processing device according to the third embodiment.
Fig. 18 is a plan view of a laser scanning device according to a fourth embodiment.
Fig. 19 is a plan view of a laser processing device according to the fourth embodiment.
Fig. 20 is a perspective view of a laser scanning device according to a comparative example.
Fig. 21 is a plan view of the laser scanning device according to the comparative example.
Fig. 22 is a view for describing an effective scanning length of a laser beam according to the comparative example.
Fig. 23 is a view for describing an ideal scanning length of a laser beam according to the comparative example.
Fig. 24 is a plan view of a laser processing device according to the comparative example.

DESCRIPTION OF EMBODIMENTS

Hereinafter, first to fourth embodiments in the disclosure will be described. In the following description of the drawings, the same reference signs or similar reference signs are assigned to the same portions and similar portions. However, the relationship between a thickness and a plane dimension, thickness ratios of respective devices and members, and the like in the drawings are different from those in reality. Therefore, specific thicknesses and dimensions should be determined in consideration of the following description. In addition, there are portions having different dimensional relationships and ratios between the respective drawings.

First, problems in the case of performing laser processing on a grain-oriented electrical steel sheet using a laser scanning device will be described.

In recent years, various studies have been conducted regarding a so-called magnetic domain control process in which iron loss of a grain-oriented electrical steel sheet (hereinafter, referred to as the electrical steel sheet) is reduced by irradiating the surface of the electrical steel sheet with a minute laser beam focused to a diameter of 1 mm or less while passing the electrical steel sheet at a high speed in the rolling direction to perform scanning in the sheet width direction and forming processed portions, which are linear stress or grooves, on the surface of the electrical steel sheet at regular intervals.

In such a magnetic domain control process, for example, a polygon mirror type laser scanning device using a polygon mirror is used to perform the scanning of the laser beam. However, if an attempt is made to form the processed portion on the surface of the electrical steel sheet by performing the scanning with only one laser scanning device in a case where an electrical steel sheet having a sheet width of about 1.0 m to 1.5 m is passed at a speed of about 100 m per minute, a polygon mirror capable of scanning with a laser beam at an ultra-high speed is required, and a laser beam output unit having a high output is required. However, a laser scanning device including such a polygon mirror and such a laser beam output unit becomes extremely expensive. In addition, it is difficult to achieve a mirror or a lens capable of uniformly focusing a laser beam to a diameter of 1 mm or less over the entire area in the sheet width direction of the electrical steel sheet having the sheet width of about 1.0 m to 1.5 m. Even if such a mirror or lens can be achieved, a laser scanning device including this mirror or lens becomes extremely expensive.

In this regard, in order to suppress the cost, a technique is adopted in which a plurality of laser scanning devices is arranged in the sheet width direction of the electrical steel sheet with a scanning width per laser scanning device being set to be short such that scanning can be performed over substantially the entire area in the sheet width direction of the electrical steel sheet using a plurality of laser beams.

(Comparative Example)

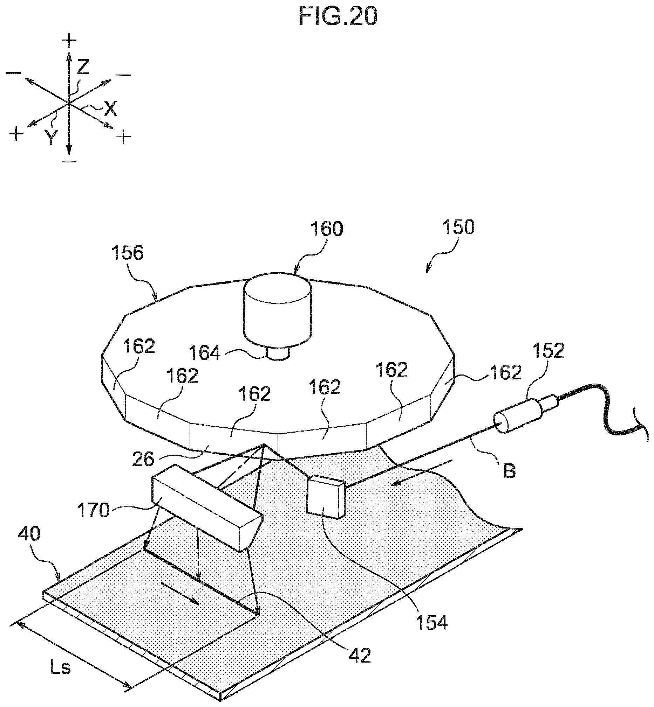

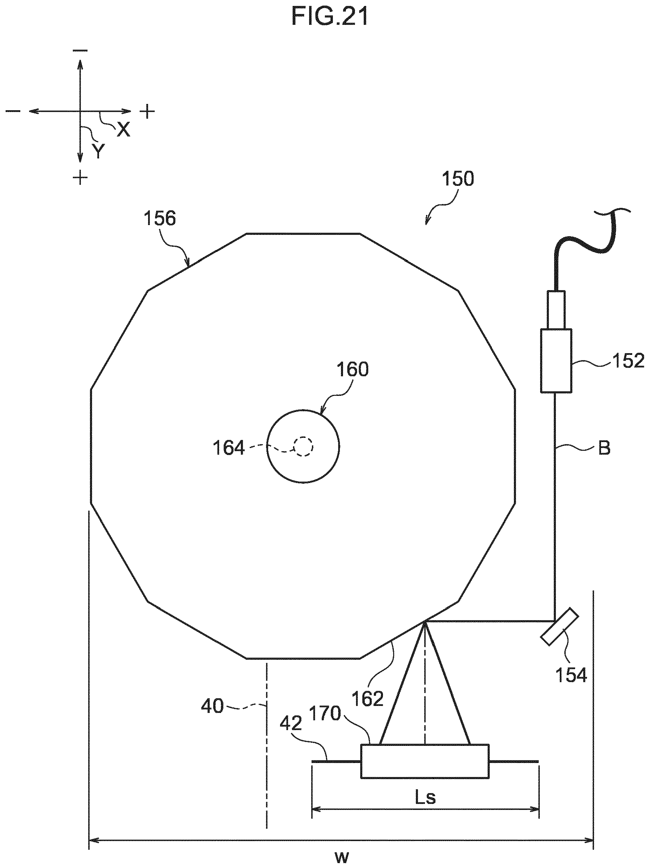

Figs. 20 and 21 illustrate a laser scanning device 150 according to a comparative example as an example of the polygon mirror type laser scanning device. The laser scanning device 150 according to the comparative example includes a laser beam output unit 152, a plane mirror 154, a polygon mirror 156, a motor 160, and a focusing mirror 170. The X-axis direction corresponds to the sheet width direction of an electrical steel sheet 40, the Y-axis direction corresponds to the length direction of the electrical steel sheet 40, and the Z-axis direction corresponds to the sheet thickness direction of the electrical steel sheet 40. The electrical steel sheet 40 is passed from the negative side to the positive side in the Y-axis direction. Hereinafter, in some cases, the sheet width direction of the electrical steel sheet 40 is referred to as the X-axis direction, the length direction of the electrical steel sheet 40 is referred to as the Y-axis direction, and the sheet thickness direction of the electrical steel sheet 40 may be referred to as the Z-axis direction.

The laser beam output unit 152 irradiates a laser beam B, and the plane mirror 154 reflects the laser beam B irradiated from the laser beam output unit 152 toward the polygon mirror 156. The polygon mirror 156 is formed in a disk shape using a short polygonal prism, and mirrors are provided on surfaces of the respective surfaces corresponding to the outer peripheral surface, so that a plurality of mirror surfaces 162 are formed. The polygon mirror 156 is fixed to a rotation axis 164 of the motor 160 and rotates integrally with the rotation axis 164.

The rotation axis 164 extends in the normal direction (that is, the Z-axis direction) of a surface of the electrical steel sheet 40, and a rotation plane of the polygon mirror 156 is substantially parallel to the surface of the electrical steel sheet 40 (that is, substantially parallel to the X-Y plane). The polygon mirror 156 reflects the laser beam B reflected at the plane mirror 154 toward the focusing mirror 170 by the mirror of the mirror surface 162 that has moved to a position facing the plane mirror 154 in the X-axis direction and facing the focusing mirror 170 in the Y-axis direction among the plurality of mirror surfaces 162. The focusing mirror 170 reflects the laser beam B reflected at the mirror surface 162 toward the electrical steel sheet 40 and causes the laser beam B to be focused on the surface of the electrical steel sheet 40.

When the polygon mirror 156 rotates, a reflection angle of the laser beam B at the time of being reflected at the mirror of the mirror surface 162 continuously changes, and an incident position of the laser beam B incident on the focusing mirror 170 changes. As a result, a position on the electrical steel sheet 40 irradiated with the laser beam B is changed, and the surface of the electrical steel sheet 40 is continuously scanned with the laser beam B, whereby a processed portion 42, which is a linear stress or groove, is formed on the surface of the electrical steel sheet 40. Further, the mirror surface 162 that reflects the laser beam B is switched to the next mirror surface 162 with the rotation of the polygon mirror 156, so that the position on the electrical steel sheet 40 irradiated with the laser beam B is discontinuously changed. At the same time, the electrical steel sheet 40 moves at a constant speed in the Y direction, so that the next processed portion 42 is formed on the surface of the electrical steel sheet 40 at a regular interval in the Y-axis direction from the current processed portion 42. Fig. 20 illustrates only the current processed portion 42 for convenience.

However, the following problems occur if a plurality of laser scanning devices 150 as described above are arranged in the sheet width direction of the electrical steel sheet 40 to scan the plurality of laser beams B in the sheet width direction of the electrical steel sheet 40 in order to perform scanning over substantially the entire area in the width direction of the electrical steel sheet 40.

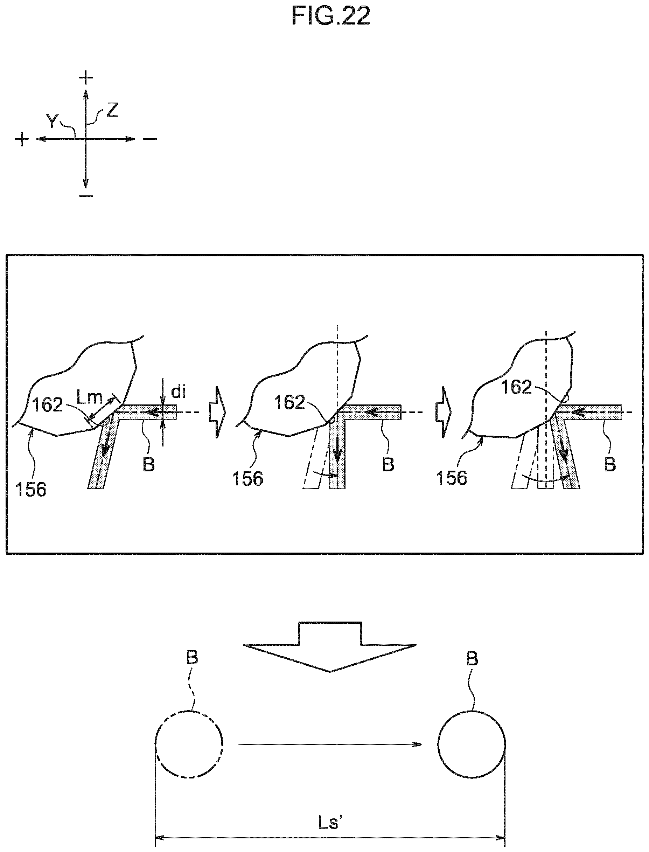

Fig. 22 is a view illustrating an effective scanning length Ls' of the laser beam B. The effective scanning length Ls' corresponds to a beam diameter of the laser beam reflected at the polygon mirror 156 at a time of reaching the electrical steel sheet 40, the beam diameter moving on the surface of the electrical steel sheet along a direction of the rotation axis 164 of the polygon mirror 156 during a period between a beam diameter of the laser beam B, which has a finite beam diameter di and is irradiated from the laser beam output unit 152, at a time of reaching a mirror formed on the mirror surface 162 of the polygon mirror 156 coming into contact with one edge of the mirror until coming into contact with the other end of the mirror as the polygon mirror 156 rotates.

It is assumed that the beam diameter di of the laser beam B irradiated from the laser beam output unit 152 is generally defined as a diameter at which the intensity is "$1/e^2$" of the optical axis central intensity assuming that the intensity distribution of the laser beam B in a direction parallel to the rotation plane of the polygon mirror 156 is a Gaussian distribution, and as a diameter of a region including about 86% of the entire power of the laser beam B, but may be defined, if appropriate, as a diameter of a region including 90% of the entire power, a diameter of a region including 95% of the entire power, or the like.

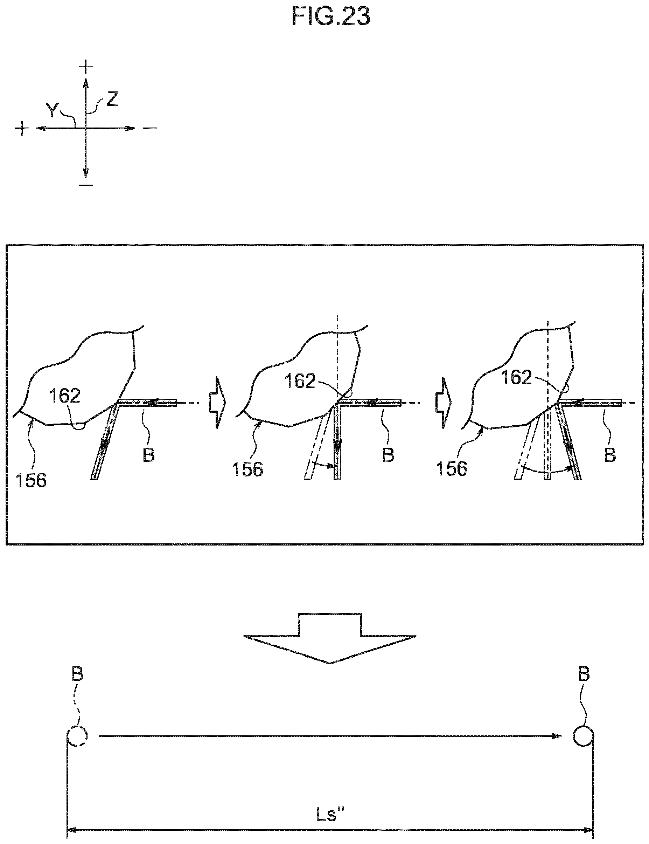

Fig. 23 is a view for describing an ideal scanning length Ls" of the laser beam B. The ideal scanning length Ls" corresponds to a length of an optical axis at a time when the laser beam reflected at the polygon mirror 156 reaches the electrical steel sheet 40, the optical axis moving on the surface of the electrical steel sheet along the direction of the rotation axis 164 of the polygon mirror 156, during a period between an optical axis at a time when the laser beam B (that is, the laser beam B whose beam diameter can be regarded as a point) irradiated from the laser beam output unit 152 reaches a mirror formed on the mirror surface 162 of the polygon mirror 156 coming into contact with one edge of the mirror until coming into contact with the other end of the mirror as the polygon mirror 156 rotates.

In the above-described polygon mirror type laser scanning device, diffused reflection of the laser beam B and/or divided reflection of the laser beam B occur at a boundary between the plurality of mirror surfaces 162 formed on the outer peripheral surface of the polygon mirror 156. Thus, the power of the laser beam B with which the surface of the electrical steel sheet 40 is irradiated decreases at a timing when an outer shape of the laser beam B passes the boundary and the boundary is located inside the outer shape of the laser beam B, and thus, the effective scanning length Ls' obtained by considering a size of the beam diameter of the laser beam B is shorter than the ideal scanning length Ls" obtained without considering the size of the beam diameter of the laser beam B.

Therefore, in a case in which a plurality of the polygon mirror type laser scanning devices is arranged in the sheet width direction of the electrical steel sheet 40 to scan the plurality of laser beams B in the sheet width direction of the electrical steel sheet 40, the number of the laser scanning devices 150 required to scan the plurality of laser beams B in the sheet width direction of the electrical steel sheet 40 increases.

In the laser scanning device 150 according to the comparative example described above, reflection loss of the laser beam B at the boundary between the plurality of mirror surfaces 162 is determined by a ratio between a tangential length Lm of the mirror surface 162 along a tangential direction of the polygon mirror 156 and the beam diameter di of the laser beam B incident on the mirror surface 162. For example, if the tangential length Lm is sufficiently larger than the beam diameter di, the reflection loss decreases, and the effective scanning length Ls' increases.

Here, it is conceivable to reduce the beam diameter di in order to increase Lm/di to reduce the reflection loss of the laser beam B, but a focusing diameter df of the laser beam B is proportional to 1/di as shown in the following Formula (1).

$$df = \alpha \times (f \times \lambda)/di \cdots (1)$$

Here, $\alpha$ is a constant unique to the laser beam B, $\lambda$ is a wavelength of the laser beam B, and f is a focal length of the focusing mirror 170.

Thus, when the beam diameter di decreases, the focusing performance of the laser beam B decreases, and there is a possibility that it is difficult to form a stress or a groove on the surface of the electrical steel sheet 40. In a case in which the high-output laser beam B is used as in a case in which a groove is formed on the surface of the electrical steel sheet 40, there is a problem that the power density on the mirror surface increases if the beam diameter di is decreased, and a problem of damage of the mirror also occurs. Therefore, there is a limit to decrease the beam diameter di.

Further, in order to increase Lm/di, it is conceivable to increase the tangential length Lm. In order to increase the tangential length Lm, a diameter of the polygon mirror 156 may be increased. In the laser scanning device 150 according to the comparative example, however, the rotation plane of the polygon mirror 156 is parallel to the surface of the electrical steel sheet 40. Thus, when the diameter of the polygon mirror 156 is increased, a width (that is, width occupied by the laser scanning device 150) w of the laser scanning device 150 increases as illustrated in Fig. 21. Therefore, there is a problem that it is difficult to install all the laser scanning devices 150 side by side in the sheet width direction of the electrical steel sheet 40 due to the restriction of the installation place.

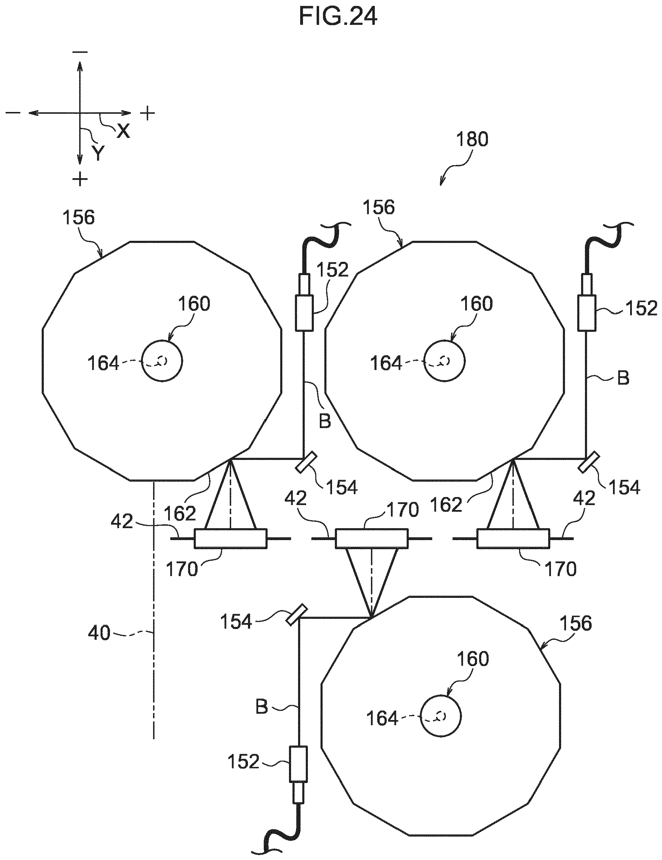

In this regard, it is conceivable to arrange the plurality of laser scanning devices 150 side by side in the sheet width direction and the length direction of the electrical steel sheet 40 as illustrated in Fig. 24. However, in a case in which the plurality of laser scanning devices 150 are arranged side by side in the sheet width direction and the length direction of the electrical steel sheet 40 as described above, there is a problem that a laser processing device 180 including the plurality of laser scanning devices 150 as a whole is increased in size and the cost increases.

Note that the configuration in which light in a direction of the X-Y plane of the beam is focused by the single focusing mirror 170 has been described as a focusing element in the comparative example illustrated in Fig. 20, but as another method, an f$\theta$ lens may be used instead of the focusing mirror 170. Alternatively, a configuration in which a condenser lens is used in front of the plane mirror 154 and a plane mirror is used instead of the focusing mirror 170, or a configuration in which a focusing mirror that focuses only light in the X-axis direction of the laser beam B and a focusing mirror that focuses only light in the Y-axis direction are combined to cause the laser beam B to be focused on an ellipse may be adopted. In any configuration, there is a limit to reduce the beam diameter di on the mirror surface 22 of the polygon mirror 156 due to the above-described reason, and thus, it is necessary to increase the diameter of the polygon mirror 156 in order to increase the effective scanning length Ls'.

[First Embodiment]

Next, a first embodiment in the disclosure will be described.

The first embodiment in the disclosure has been made in view of the above problems, and aims to provide a laser scanning device capable of reducing a width occupied by the laser scanning device as compared with a configuration in which a rotation plane of a polygon mirror is parallel to a surface of an electrical steel sheet as in the laser scanning device according to the comparative example, and further to provide a laser processing device capable of achieving downsizing and cost down by reducing the number of the laser scanning devices required for scanning a plurality of laser beams in a sheet width direction of the electrical steel sheet.

In the disclosure, a surface of a predetermined object is irradiated with a laser beam B to process the surface of the object or modify the surface of the object as will be described later. As the object, various metal materials can be used. For example, an electrical steel sheet 40 can be used, and it is particularly preferable to use a grain-oriented electrical steel sheet, and thus, the following description will be given using the electrical steel sheet 40 as an example of the object.

(Laser Scanning Device)

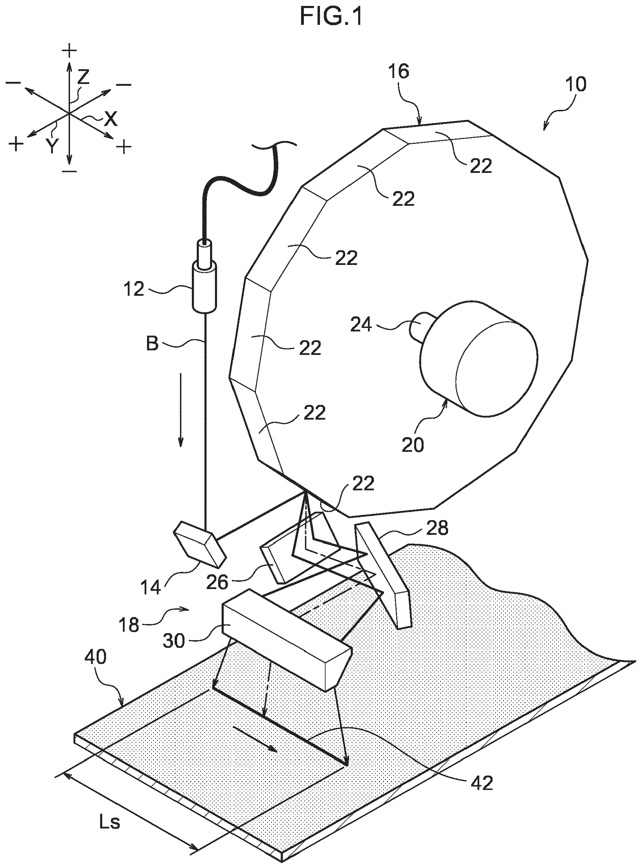

As illustrated in Fig. 1, a laser scanning device 10 according to the first embodiment includes a laser beam output unit 12, a plane mirror 14, a polygon mirror 16, an optical system 18, and a motor 20.

The laser beam output unit 12 irradiates the laser beam B irradiated from a laser light source (not illustrated) and transmitted using an optical fiber or the like toward the plane mirror 14 to be described later. The laser beam output unit 12 is arranged, for example, on the positive side in the Y-axis direction (in other words, the positive direction side of the Y axis) of the polygon mirror 16 and on the positive side in the Z-axis direction (in other words, the positive direction side of the Z axis) of the electrical steel sheet 40. The laser beam output unit 12 is arranged in a direction in which the laser beam B is irradiated toward the negative side in the Z-axis direction (in other words, the negative direction side of the Z axis, that is, the side of the electrical steel sheet 40).

The plane mirror 14 reflects the laser beam B output from the laser beam output unit 12 and changes the traveling direction of the laser beam B to a direction of a mirror surface 22 of the polygon mirror 16 to be described later. For example, the plane mirror 14 is arranged in a space on the lower side (that is, the negative side in the Z-axis direction) of the laser beam output unit 12 and on the upper side (that is, the positive side in the Z-axis direction) of the electrical steel sheet 40, and is arranged on an optical path of the laser beam B between the laser beam output unit 12 and the polygon mirror 16 to be described later. In this case, the plane mirror 14 is arranged in a direction in which the laser beam B output from the laser beam output unit 12 is reflected to the negative side in the Y-axis direction (that is, the side of the polygon mirror 16).

The polygon mirror 16 has a polygonal shape having a top surface (that is, an upper surface) and a bottom surface (that is, a lower surface) which are polygonal. In the polygon mirror 16, at least one surface excluding the top surface and the bottom surface is formed as a mirror to form the mirror surface 22. The polygon mirror 16 rotates about an axis serving as a rotation axis 24 and penetrating the top surface and the bottom surface. The polygon mirror 16 reflects the laser beam B, irradiated from the laser beam output unit 12 and reflected at the plane mirror 14, at the mirror on the mirror surface 22.

Therefore, a direction of the laser beam B reflected at the mirror surface 22 changes according to the rotation of the polygon mirror 16, and a position where the laser beam B reaches the surface of the electrical steel sheet 40 through the optical system 18, which will be described later, also changes. Therefore, the surface of the electrical steel sheet 40 can be scanned with the laser beam B according to the rotation of the polygon mirror 16. Although the top surface and the bottom surface of the polygon mirror 16 are polygons, there is a case where the polygons are regarded as circles, and a diagonal line thereof is expressed as an "outer diameter" in the following description.

The rotation axis 24 of the polygon mirror 16 is fixed to the rotation axis of the motor 20 and rotates integrally. The motor 20 may include a speed reduction mechanism connected to the rotation axis 24. The rotation axis 24 of the polygon mirror 16 extends in parallel to the surface of the electrical steel sheet 40, and extends, for example, in the X-axis direction. A rotation plane of the polygon mirror 16 is the Y-Z plane orthogonal to the X-axis direction when viewed in the Z-axis direction. The polygon mirror 16 is arranged at a position where the laser beam B is reflected at a first mirror 26, which will be described later, located on the substantially negative side in the Z-axis direction in a case in which a plurality of the mirror surfaces 22 are located to face the plane mirror 14 in the substantially Y-axis direction and face the first mirror 26 in the substantially Z-axis direction.

The optical system 18 is an optical element group that guides the laser beam B reflected at the polygon mirror 16 to the surface of the electrical steel sheet 40 which is the object. The optical system 18 can be achieved by combining known optical elements as appropriate, and includes, for example, the first mirror 26, a second mirror 28, and a focusing mirror 30.

The first mirror 26 is arranged on the negative side in the Z-axis direction facing the mirror surface 22 that reflects the laser beam B among the plurality of mirror surfaces 22. The first mirror 26 is arranged in a direction in which the laser beam B having been reflected at the mirror surface 22 is reflected toward the positive side in the X-axis direction. The first mirror 26 is arranged in a direction in which an optical axis of the first mirror 26 is parallel to the X-axis direction.

The second mirror 28 is arranged on the positive side in the X-axis direction with respect to the first mirror 26, and is arranged in a direction in which the laser beam B having been reflected at the first mirror 26 is reflected to the positive side in the Y-axis direction. The second mirror 28 is arranged in a direction in which an optical axis of the second mirror 28 is parallel to the Y-axis direction. The focusing mirror 30 is, for example, a focusing parabolic mirror.

The focusing mirror 30 is arranged on the positive side in the Y-axis direction with respect to the second mirror 28 and on the positive side in the Z-axis direction with respect to the electrical steel sheet 40. The focusing mirror 30 is arranged in a direction in which the laser beam B having been reflected at the second mirror 28 is reflected to the negative side in the Z-axis direction (that is, the side of the electrical steel sheet 40). The focusing mirror 30 is arranged in a direction in which an optical axis of the focusing mirror 30 is parallel to the Z-axis direction. A position of the focusing mirror 30 is set to a position where the incident laser beam B is focused on the surface of the electrical steel sheet 40.

The focusing mirror 30 is formed in an elongated shape. A direction of the focusing mirror 30 is set such that the longitudinal direction of the focusing mirror 30 is parallel to the X-axis direction when viewed in the Z-axis direction, whereby a scanning direction of the laser beam B is set to be substantially parallel to the X-axis direction. In this manner, the optical system 18 can guide the laser beam B reflected at the polygon mirror 16 to the surface of the electrical steel sheet 40, and can change a position irradiated with the laser beam B on the surface of the electrical steel sheet 40 in parallel to the X-axis direction, for example, according to the rotation of the polygon mirror 16. That is, the surface of the electrical steel sheet 40, which is the object, can be scanned with the laser beam B, and it is possible to process the surface of the electrical steel sheet 40 or modify the surface of the electrical steel sheet 40.

In the disclosure, in a case in which the rotation axis 24 of the polygon mirror 16 is oriented in the X-axis direction as illustrated in Fig. 1, the surface of the electrical steel sheet 40 is scanned with the laser beam B irradiated from the optical system 18, in particular, the focusing mirror 30 in a direction along the X-axis direction. That is, the direction of the rotation axis 24 of the polygon mirror 16 and the scanning direction are parallel. In other words, the rotation axis 24 extends along the direction in which the laser beam B is scanned. Therefore, when the laser scanning device 10 according to the disclosure is used, a width occupied by the polygon mirror 16 in the width direction of the electrical steel sheet 40, the width being likely to increase in the radial direction perpendicular to the rotation axis 24, can be made relatively smaller than a scannable width. That is, the width occupied by one laser scanning device 10 can be reduced.

(Flow of Processing Using Laser Scanning Device)

Next, a flow of processing using the laser scanning device 10 according to the first embodiment will be described.

The laser scanning device 10 performs processing of scanning the surface of the electrical steel sheet 40 with the laser beam B, and is executed by the laser scanning device 10.

In the laser scanning device 10, when the laser beam B is irradiated from the laser beam output unit 12 toward the plane mirror 14, the laser beam B is reflected at the plane mirror 14 to the negative side in the Y-axis direction (that is, the side of the polygon mirror 16).

Next, the motor 20 is operated to rotate the polygon mirror 16 integrally with the rotation axis 24 of the motor 20, and the laser beam B irradiated from the laser beam output unit 12 is reflected at the mirror of the mirror surface 22 of the polygon mirror 16.

The laser beam B having been reflected at the mirror of the mirror surface 22 is reflected at the first mirror 26 to the positive side in the X-axis direction, and the laser beam B having been reflected at the first mirror 26 is reflected at the second mirror 28 to the positive side in the Y-axis direction. The laser beam B having been reflected at the second mirror 28 is reflected at the focusing mirror 30 to be focused on the surface of the electrical steel sheet 40. That is, the laser beam B reflected at the polygon mirror 16 is guided to the surface of the electrical steel sheet 40.

When the polygon mirror 16 rotates, a reflection angle of the laser beam B reflected at the mirror surface 22 continuously changes, and an incident position of the laser beam B incident on the first mirror 26, an incident position of the laser beam B incident on the second mirror 28, and an incident position of the laser beam B incident on the focusing mirror 30 each change. Then, the laser beam B is irradiated in the X-axis direction, and the surface of the electrical steel sheet 40 is irradiated with the laser beam B, so that a processed portion 42, which is a linear stress or groove, is formed on the surface of the electrical steel sheet 40.

In addition, the mirror surface 22 that reflects the laser beam B is switched to the next mirror surface 22 with the rotation of the polygon mirror 16, so that the next processed portion 42 is formed on the surface of the electrical steel sheet 40 at a regular interval in the Y-axis direction from the current processed portion 42. Fig. 1 illustrates only the current processed portion 42 for convenience.

(Relationship between Width and Effective Scanning Length of Laser Scanning Device)

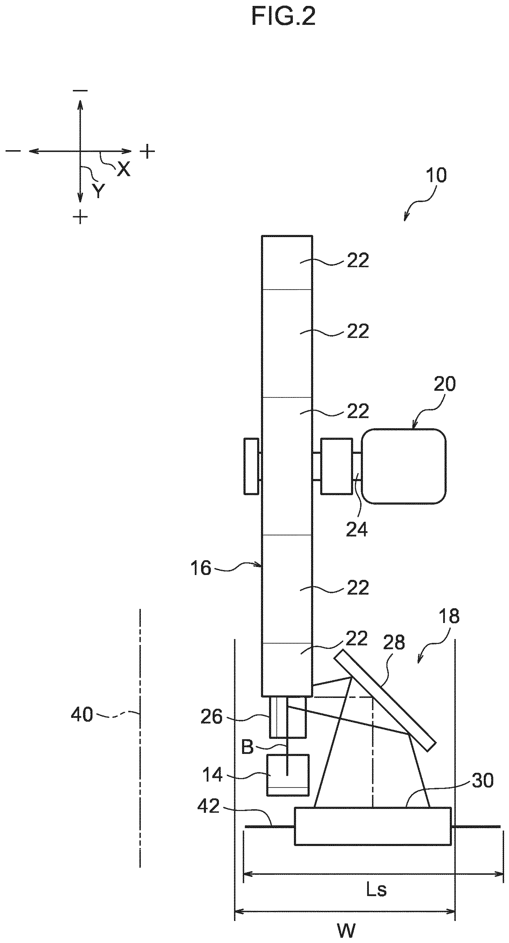

Next, a relationship between a width W and an effective scanning length Ls of the laser scanning device 10 illustrated in Fig. 2 will be described.

In the laser scanning device 10 according to the first embodiment, the rotation plane (that is, the Y-Z plane) of the polygon mirror 16 is orthogonal to the X-axis direction. As a result, the width W of the laser scanning device 10 according to the first embodiment is narrower than the width (that is, width occupied in the width direction of the electrical steel sheet 40) w of the laser scanning device 150 according to the comparative example illustrated in Fig. 21. The laser scanning device 10 according to the first embodiment satisfies W < Ls in the relationship between the width W and the effective scanning length Ls. For example, in a case in which the effective scanning length Ls is about 200 mm, a diameter of the polygon mirror 16 is preferably 400 mm or more, but the width W of the laser irradiation device does not depend on the diameter of the polygon mirror and is, for example, about 150 mm in the example according to the present invention.

The width W is a width (that is, width occupied in the width direction of the electrical steel sheet 40) of the laser scanning device 10 along the X-axis direction. The width W corresponds to the maximum width between an end on the positive side and an end on the negative side in the X-axis direction of the laser scanning device 10.

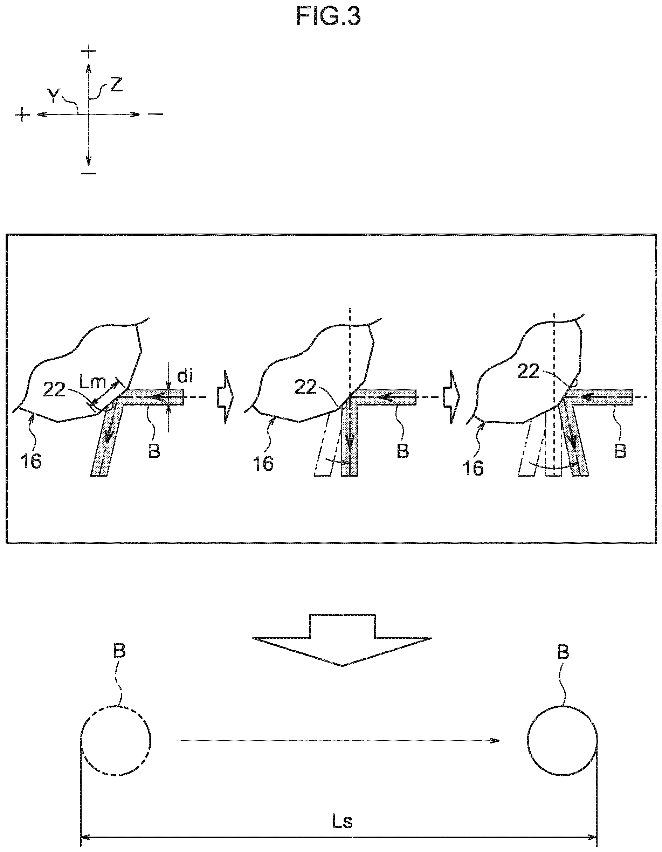

As illustrated in Fig. 3, the effective scanning length Ls is a beam diameter of the laser beam B reflected at the polygon mirror 16 at a time of reaching the electrical steel sheet 40, the beam diameter moving on the surface of the electrical steel sheet 40, during a period between a beam diameter of the laser beam B irradiated from the laser beam output unit 12 at a time of reaching a mirror formed on the polygon mirror 16 coming into contact with one edge of the mirror until coming into contact with the other end of the mirror as the polygon mirror 16 rotates. The effective scanning length Ls is defined by a length along the direction of the rotation axis 24 of the polygon mirror 16. The effective scanning length Ls corresponds to a length of the processed portion 42 in the X-axis direction.

Although a part of a range of the width W of the laser scanning device 10 protrudes from a range of the effective scanning length Ls in the laser scanning device 10 according to the first embodiment as illustrated in Fig. 2, the range of the width W of the laser scanning device 10 may protrude from the range of the effective scanning length Ls as long as the relationship of W < Ls is satisfied.

With such a laser processing device, in a case in which plural laser scanning lines are superimposed with each other by a constant width in the sheet width direction required for magnetic domain control of the electrical steel sheet, the laser irradiation devices can be arranged in a line in the width direction, and space-saving and compact equipment can be configured.

(Laser Processing Device)

Next, a laser processing device 50 using the laser scanning device 10 according to the first embodiment will be described.

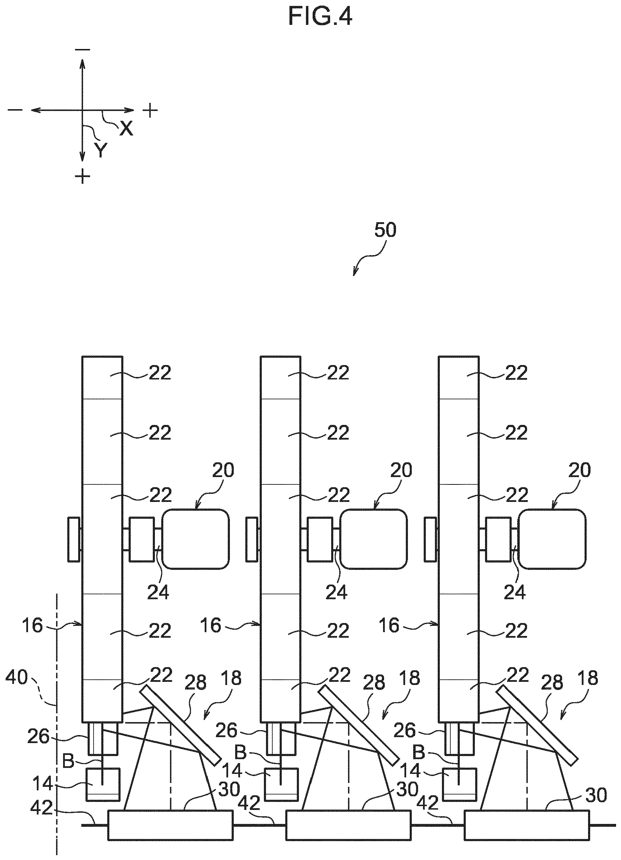

As illustrated in Fig. 4, the laser processing device 50 according to the first embodiment includes a plurality of the laser scanning devices 10. The plurality of laser scanning devices 10 are arranged side by side in the X-axis direction. Positions of the plurality of laser scanning devices 10 are set to positions at which the processed portions 42 are formed to be continuous in the X-axis direction or the processed portion 42 are formed to partially overlap each other in the X-axis direction by the adjacent laser scanning devices 10.

In the laser processing device 50 according to the first embodiment, the adjacent laser scanning devices 10 are controlled to perform scanning with the laser beams B in the same direction and/or controlled to shift scanning timings of the laser beams B in order to avoid interference between the two laser beams B with which the surface of the electrical steel sheet 40 is irradiated by the adjacent laser scanning devices 10.

Although Fig. 4 illustrates three laser scanning devices 10 as an example, the number of the plurality of laser scanning devices 10 included in the laser processing device 50 only needs to be two or more and may be any number.

Since the laser processing device 50 can reduce a width occupied by each of the laser scanning devices 10 in the width direction of the electrical steel sheet 40 with respect to a scanning width by using the laser scanning devices 10, the laser processing device 50 as a whole can be configured to be compact.

(Electrical Steel Sheet Manufacturing Method)

Next, an electrical steel sheet manufacturing method according to the first embodiment will be described.

The electrical steel sheet manufacturing method according to the first embodiment is an electrical steel sheet manufacturing method using the laser scanning device 10 according to the first embodiment, and includes a hot rolling step, a cold rolling step, a primary recrystallization annealing step, a secondary recrystallization annealing step, a coating step, and a laser processing step.

In the hot rolling step, a slab is hot-rolled to produce a hot-rolled steel sheet. In the cold rolling step, the hot-rolled steel sheet is cold-rolled to produce a cold-rolled steel sheet. In the primary recrystallization annealing step, the cold-rolled steel sheet is subjected to decarburization annealing to develop primary recrystallization in the cold-rolled steel sheet. In the secondary recrystallization annealing step, the cold-rolled steel sheet after the decarburization annealing is subjected to finish annealing to develop secondary recrystallization in the cold-rolled steel sheet, thereby forming the cold-rolled steel sheet into the electrical steel sheet 40. In the coating step, coating is performed on the electrical steel sheet 40 after the finish annealing.

The laser processing step is performed after the secondary recrystallization step as an example. In the laser processing step, the surface of the electrical steel sheet 40 is scanned and irradiated with the laser beam B to form the processed portion 42 on the surface of the electrical steel sheet 40. In the laser processing step, a laser processing method using the laser processing device 50 illustrated in Fig. 4 is executed.

In the laser processing method, the laser beam B is output from the laser beam output unit 12 in each of the plurality of laser scanning devices 10 arranged side by side in the X-axis direction, the laser beam B output from the laser beam output unit 12 is reflected at the plane mirror 14, the laser beam B having been reflected at the plane mirror 14 is reflected at the polygon mirror 16 while rotating the polygon mirror 16, and the laser beam B having been reflected at the polygon mirror 16 is guided to the surface of the electrical steel sheet 40 by the optical system 18. With this laser processing method, the processed portion 42, which is the stress or groove, is formed on the surface of the electrical steel sheet 40 over the sheet width direction.

In addition, in the laser processing step, the above-described laser processing method is repeatedly executed while passing the electrical steel sheet 40, whereby a plurality of the processed portions 42 continuous in the X-axis direction or partially overlapping each other in the X-axis direction are formed at regular intervals in the length direction of the electrical steel sheet 40.

(Functions and Effects of First Embodiment)

Next, functions and effects of the first embodiment will be described.

As described above in detail, the rotation axis 24 extends in the X-axis direction, and the rotation plane of the polygon mirror 16 is orthogonal to the X-axis direction when viewed in the Z-axis direction in the laser scanning device 10 according to the first embodiment. Therefore, in the laser scanning device 10 according to the first embodiment illustrated in Fig. 2, the width W occupied by the laser scanning device 10 along the X-axis direction can be reduced, for example, as compared with a case in which the rotation plane of the polygon mirror 156 is parallel to the surface of the electrical steel sheet 40 as in the laser scanning device 150 according to the comparative example illustrated in Fig. 20.

In addition, the width W of the laser scanning device 10 can be made smaller than the effective scanning length Ls since the rotation plane of the polygon mirror 16 is orthogonal to the X-axis direction when viewed in the Z-axis direction in the laser scanning device 10 according to the first embodiment. Therefore, the plurality of laser scanning devices 10 can be arranged side by side in the X-axis direction while avoiding interference between the adjacent laser scanning devices 10 in the laser processing device 50 including the plurality of laser scanning devices 10. As a result, it is possible to achieve downsizing and cost down of the laser processing device 50 including the plurality of laser scanning devices 10 with the laser processing device 50 according to the first embodiment illustrated in Fig. 4, for example, as compared with a case in which the plurality of laser scanning devices 150 are arranged side by side in the X-axis direction and the Y-axis direction as in the laser processing device 180 according to the comparative example illustrated in Fig. 24.

(Modification of First Embodiment)

Next, a modification of the first embodiment will be described.

The laser processing step is performed after the secondary recrystallization step as an example in the first embodiment, but may be performed after any one of the cold rolling step, the primary recrystallization annealing step, and the coating step. In addition, the laser processing step may be performed after the coating step in a case in which a stress is formed on the surface of the electrical steel sheet 40 in the laser processing step. A recoating step may be performed after the laser processing step if necessary.

Note that, in a case in which the laser processing step is performed after the cold rolling step, the cold-rolled steel sheet corresponds to an example of an "object" and a "steel sheet formed on an electrical steel sheet" in the disclosure.

The laser scanning device 10, the laser scanning method, the laser processing device 50, and the laser processing method are applied to laser processing of the electrical steel sheet in the first embodiment, but may be applied to laser processing of an object other than the electrical steel sheet.

In the first embodiment, the laser scanning device 10 and the laser scanning method may be applied to applications other than the laser processing.

Although the laser scanning device 10 includes the plane mirror 14 that reflects the laser beam B output from the laser beam output unit 12 toward the polygon mirror 16 in the first embodiment, the plane mirror 14 may be omitted. Further, a position of the laser beam output unit 12 may be set to a position to output the laser beam B toward the polygon mirror 16.

In the first embodiment, the laser beam output unit 12, the plane mirror 14, the first mirror 26, the second mirror 28, and the focusing mirror 30 may be arranged differently from the above.

In the first embodiment, the optical system 18 includes the first mirror 26, the second mirror 28, and the focusing mirror 30, but may include optical components other than the first mirror 26, the second mirror 28, and the focusing mirror 30.

In the first embodiment, the optical system 18 includes the focusing mirror 30, but may include an f$\theta$ lens instead of the focusing mirror 30.

Although the surface of the electrical steel sheet 40 passed in the horizontal direction is irradiated with the laser beam B by the laser scanning device 10 in the first embodiment, the surface of the electrical steel sheet 40 passed in the vertical direction or an inclined direction with respect to the vertical direction may be irradiated with the laser beam B by the laser scanning device 10.

Although the plurality of laser scanning devices 10 arranged in the X-axis direction are arranged at the same position in the Y-axis direction in the laser processing device 50 according to the first embodiment, some laser scanning devices 10 among the plurality of laser scanning devices 10 arranged in the X-axis direction may be arranged to be shifted in the Y-axis direction with respect to the other laser scanning devices 10.

[Second Embodiment]

Next, a second embodiment in the disclosure will be described.

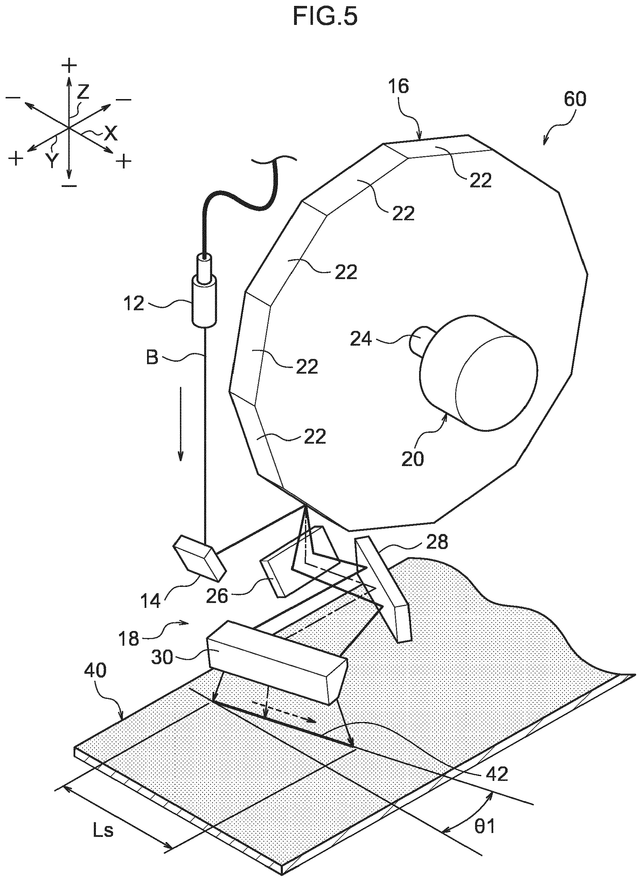

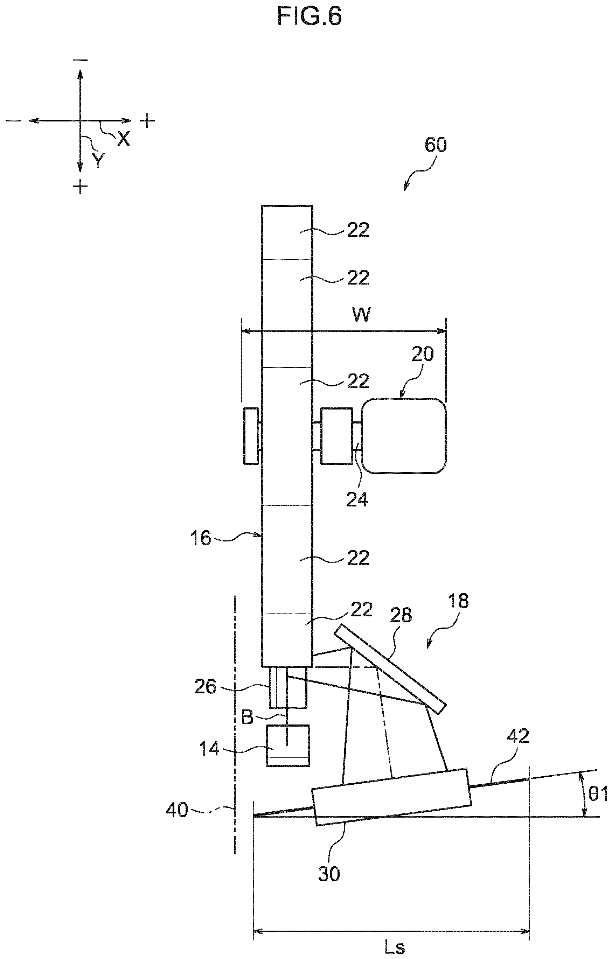

A laser scanning device 60 according to the second embodiment illustrated in Figs. 5 and 6 is different from the laser scanning device 10 according to the first embodiment illustrated in Figs. 1 and 2 in terms of the following configuration.

That is, in the laser scanning device 60 according to the second embodiment, the longitudinal direction of a focusing mirror 30 is inclined with respect to the X-axis direction when viewed in the Z-axis direction, whereby a scanning direction of a laser beam B is inclined with respect to the X-axis direction when viewed in the Z-axis direction. Even in a case where the longitudinal direction of the focusing mirror 30 is parallel to the X-axis direction without being inclined with respect to the X-axis direction, an electrical steel sheet 40 is conveyed even during a period in which scanning is performed, and thus, a direction of the scanning is not parallel to the X-axis in many cases, and is slightly inclined from the X-axis toward the Y-axis direction. Therefore, a rotation axis 24 of a polygon mirror 16 is oriented in a direction intersecting the scanning direction of the laser beam B when viewed in the normal direction of a surface of the electrical steel sheet 40 which is an object. That is, in the disclosure, the rotation axis 24 is regarded to be substantially parallel to the scanning direction even in a case in which the rotation axis 24 of the polygon mirror 16 is oriented in the direction intersecting the scanning direction of the laser beam B when viewed in the normal direction of the surface of the electrical steel sheet 40. In other words, the rotation axis 24 extends along the direction in which the laser beam B is scanned. A first inclination angle $\theta 1$ between the scanning direction of the laser beam B and the X-axis direction is set to, for example, $0° < \theta < 45°$.

When the first inclination angle $\theta 1$ is larger than 0°, a processed portion 42 formed on the surface of the electrical steel sheet 40 can be inclined with respect to the X-axis direction. Therefore, in a case in which the electrical steel sheet 40 is subjected to bending, it is possible to suppress fracture of the electrical steel sheet 40 starting from the processed portion 42. When the first inclination angle $\theta 1$ is smaller than 45°, it is possible to ensure an effect of reducing iron loss by formation of the processed portion 42 on the surface of the electrical steel sheet 40. Note that it is more preferable that the first inclination angle $\theta 1$ is from 5° to 10°.

In the laser scanning device 60 according to the second embodiment, the laser beam B is scanned in the inclination direction with respect to the X-axis direction, but an effective scanning length Ls is defined by a length of the laser beam B along the X-axis direction as described above. In a case in which a scanning length of the laser beam B is denoted by L, the effective scanning length Ls is calculated as $L \times \cos\theta$.

In the laser scanning device 60 according to the second embodiment, a rotation plane (that is, the Y-Z plane) of the polygon mirror 16 intersects the X-axis direction when viewed in the Z-axis direction as illustrated in Fig. 6. As a result, a width W of the laser scanning device 60 according to the second embodiment is narrower than the width w of the laser scanning device 150 according to the comparative example illustrated in Fig. 21. The laser scanning device 60 according to the second embodiment satisfies W < Ls in a relationship between the width W and the effective scanning length Ls.

The width W is a width of the laser scanning device 60 along the X-axis direction. The width W corresponds to a width between an end on the positive side and an end on the negative side in the X-axis direction of the laser scanning device 60. The end on the positive side and the end on the negative side in the X-axis direction of the laser scanning device 60 may be any portion of the laser scanning device 60.

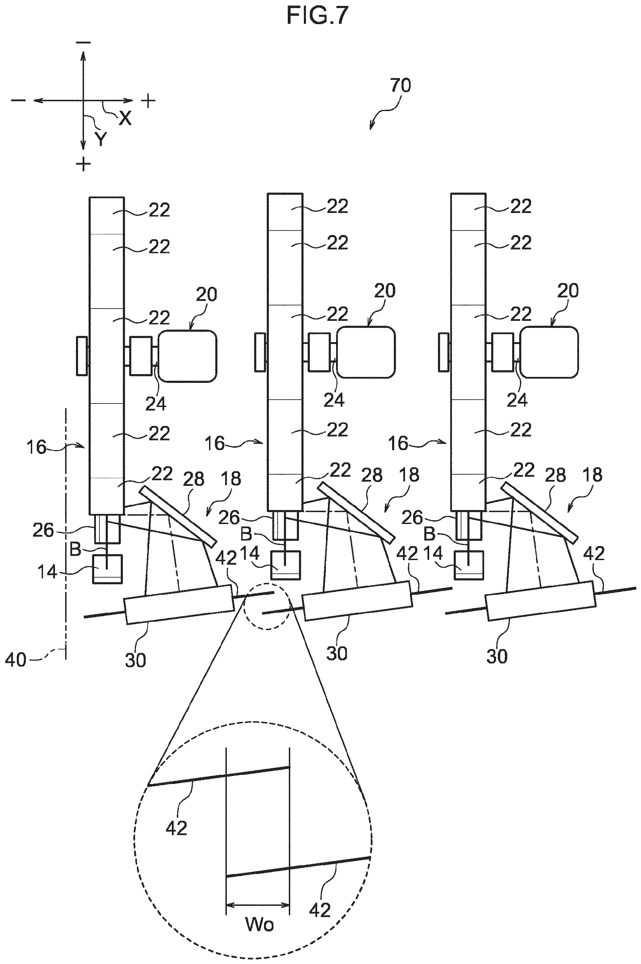

As illustrated in Fig. 7, a laser processing device 70 according to the second embodiment includes a plurality of the laser scanning devices 60. The plurality of laser scanning devices 60 are arranged side by side in the X-axis direction. Positions of the plurality of laser scanning devices 60 are set to positions where the processed portions 42 are formed to partially overlap each other in the X-axis direction by the adjacent laser scanning devices 60. An overlap length Wo corresponds to a length by which the processed portions 42 formed adj acent to each other in the X-axis direction partially overlap each other in the X-axis direction. Some of the processed portions 42 adjacent to each other in the X-axis direction are formed to be separated in the Y-axis direction.

Although Fig. 7 illustrates three laser scanning devices 60 as an example, the number of the plurality of laser scanning devices 60 included in the laser processing device 70 only needs to be two or more and may be any number.

A laser scanning method and a laser processing method according to the second embodiment are similar to the laser scanning method and the laser processing method according to the first embodiment described above except that the laser beam B is scanned in the inclination direction with respect to the X-axis direction, and the description thereof will be omitted.

(Functions and Effects of Second Embodiment)

Next, functions and effects of the second embodiment will be described regarding differences from those of the first embodiment.

In the laser scanning device 60 according to the second embodiment, the laser beam B is scanned in the inclination direction with respect to the X-axis direction, and thus, the processed portion 42, which is a linear stress or groove formed on the surface of the electrical steel sheet 40, can be inclined with respect to the X-axis direction. Therefore, even in a case in which the electrical steel sheet 40 is subjected to bending, it is possible to suppress fracture of the electrical steel sheet 40 starting from the processed portion 42.

Note that configurations of the second embodiment similar to those of the first embodiment described above have functions and effects similar to those of the first embodiment.

(First Modification of Second Embodiment)

Next, a first modification of the second embodiment in the disclosure will be described.

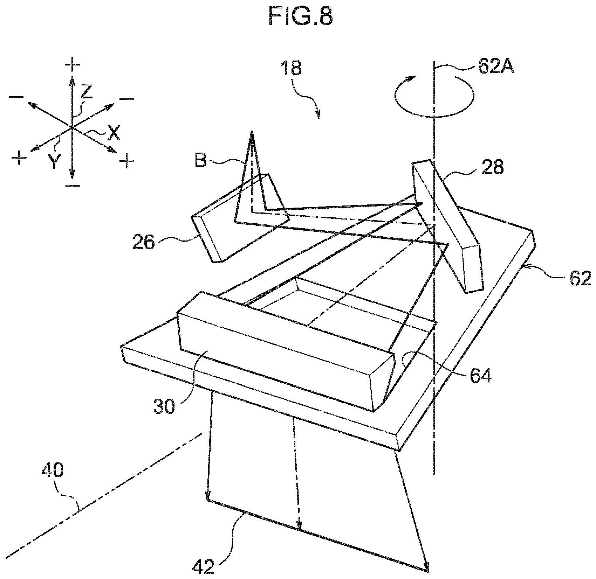

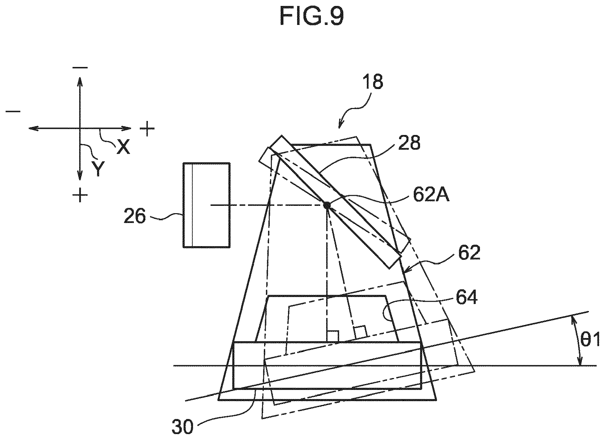

As illustrated in Figs. 8 and 9, an optical system 18 according to the second embodiment may include a first rotary member 62. The first rotary member 62 has a sheet shape and an isosceles trapezoidal shape in plan view. In the disclosure, the shape of the first rotary member 62 can be changed, if appropriate. The first rotary member 62 is supported by a rotation supporting mechanism (not illustrated) to be rotatable along the X-Y plane about a rotation center 62A. The first rotation center 62A is located on an optical axis of a first mirror 26 and on a reflective surface of a second mirror 28 when viewed in the Z-axis direction.

Even when the first rotary member 62 rotates, a distance on the optical axis center between the first mirror 26 and the second mirror 28 is the same. In addition, the first rotary member 62 rotates along a plane including an optical path of the laser beam B between the second mirror 28 and the focusing mirror 30.

The second mirror 28 and the focusing mirror 30 are fixed on an upper surface of the first rotary member 62. A hole 64 through which the laser beam B reflected at the focusing mirror 30 passes is formed in the first rotary member 62. The hole 64 has an isosceles trapezoidal shape in plan view. The second mirror 28 corresponds to a reflecting mirror according to the disclosure. In the disclosure, the shape of the hole 64 can be changed, if appropriate.

When the optical system 18 according to the second embodiment includes the first rotary member 62 in this manner, the first inclination angle θ1 between the scanning direction of the laser beam B and the X-axis direction can be adjusted.

In the first modification, the first rotary member 62 supports the second mirror 28 and the focusing mirror 30 so as to fix a relative position between the second mirror 28 and the focusing mirror 30. Thus, even in a case in which a position of the second mirror 28 changes so as to change the first inclination angle θ1 between the scanning direction and the X-axis direction, the change in the position of the second mirror 28 can be interlocked with a change in a position of the focusing mirror 30 due to the rotation of the first rotary member 62. For example, the predetermined first inclination angle θ1 may be formed by rotating the first rotary member 62 in advance before the start of scanning with the laser beam B. Alternatively, the first inclination angle θ1 may be changed, if necessary, due to a change in a sheet passing speed or by an angle rotating device (not illustrated).

That is, in the first modification, when the scanning direction is to be changed as necessary, it is unnecessary to individually adjust the second mirror 28 and the focusing mirror 30, and the scanning direction can be easily changed only by the rotation of the first rotary member 62. At that time, a position of the laser beam incident on a reflective surface of the focusing mirror 30 is constant since the relative positional relationship between the second mirror 28 and the focusing mirror 30 is fixed. Thus, focusing property does not change before and after the change in the scanning direction, and stable processing can be performed.

(Second Modification of Second Embodiment)

Next, a second modification of the second embodiment in the disclosure will be described.

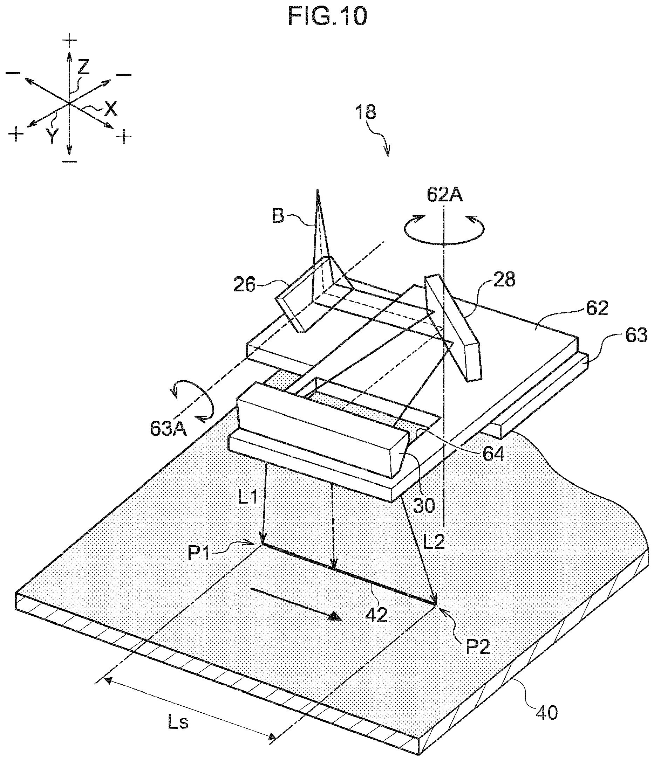

As illustrated in Figs. 10 to 14, the optical system 18 according to the second embodiment may include a second rotary member 63. As illustrated in Fig. 10, the second rotary member 63 has a sheet shape and a rectangular shape in plan view. In the disclosure, the shape of the second rotary member 63 can be changed, if appropriate.

In the second rotary member 63, the first mirror 26 is installed on an upper surface at a position of one end (left end in Fig. 10) corresponding to a lower side of a polygon mirror (not illustrated). The second rotary member 63 is supported by a rotation supporting mechanism (not illustrated) to be rotatable along the Z-X plane about a second rotation center 63A. The second rotation center 63A is located on an optical axis of the second mirror 28 and on a reflective surface on the plane of the first mirror 26 when viewed in the Y-axis direction.

The second rotary member 63 has a function of rotating about an axis of the second rotation center 63A. Even when the second rotary member 63 rotates, a distance on the optical axis between the first mirror 26 and the second mirror 28 is the same. As the second rotary member 63 rotates, the plane including an optical path of the laser beam B between the first mirror 26 and the second mirror 28 rotates to be closed to or separated from the X-Y plane in Fig. 10, that is, the surface of the electrical steel sheet 40.

In addition, the first rotary member 63 is supported to be rotatable along the X-Y plane about the first rotation center 62A at a position separated from the first mirror 26 on the upper surface of the second rotary member 62 in Fig. 10. The first rotary member 62 according to the second modification in Fig. 10 is different from the first rotary member 62 described in the first modification in that the first rotary member has a rectangular shape in plan view and that the hole 64 has a rectangular shape. Note that the shape of the hole 64 can be changed, if appropriate, in the second rotary member 63 of the second modification as well. Other configurations of the first rotary member 62 according to the second modification are similar to those of the first rotary member 62 according to the first modification.

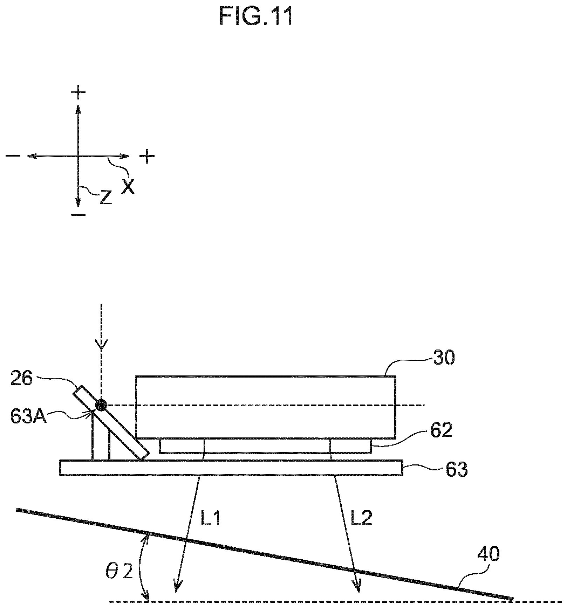

Here, a first distance L1 between a scanning start position P1 on the surface of the electrical steel sheet 40 and a reflection point of the focusing mirror 30 and a second distance L2 between a scanning end position P2 on the surface of the electrical steel sheet 40 and the reflection point of the focusing mirror 30 are set. Here, when the first distance L1 and the second distance L2 coincide with a focal length of the focusing mirror 30, no focus blur occurs over the entire length of scanning lines between the scanning start position P1 and the scanning end position P2. For example, when the surface of the electrical steel sheet 40 is inclined with respect to the horizontal direction to form a second inclination angle θ2 between the surface of the electrical steel sheet 40 and the X-axis direction as illustrated in Fig. 11, the first distance L1 and the second distance L2 are different.

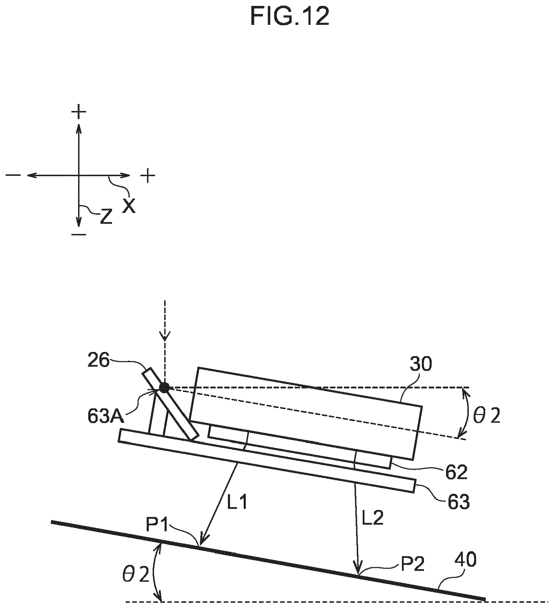

However, the first distance L1 and the second distance L2 can be controlled to coincide with the focal length of the focusing mirror 30 since the second rotary member 63 is rotated at the second inclination angle θ2 in the second modification as illustrated in Fig. 12. For example, the predetermined second inclination angle θ2 may be formed by rotating the second rotary member 63 in advance before the start of scanning with the laser beam B. Alternatively, a variation in inclination may be detected as needed by a steel sheet inclination measuring device (not illustrated) to change the second inclination angle θ2 as needed. Thus, uniform laser processing can be performed over the entire width in the scanning direction of the laser beam B on the surface of the electrical steel sheet 40 in the second modification.

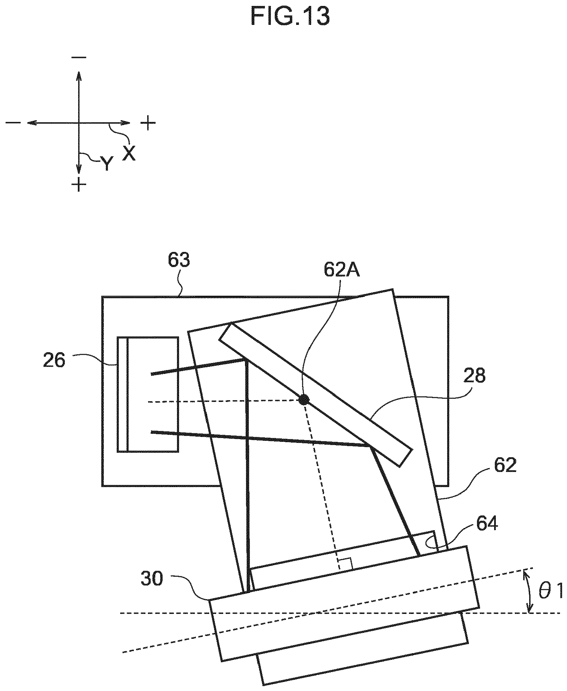

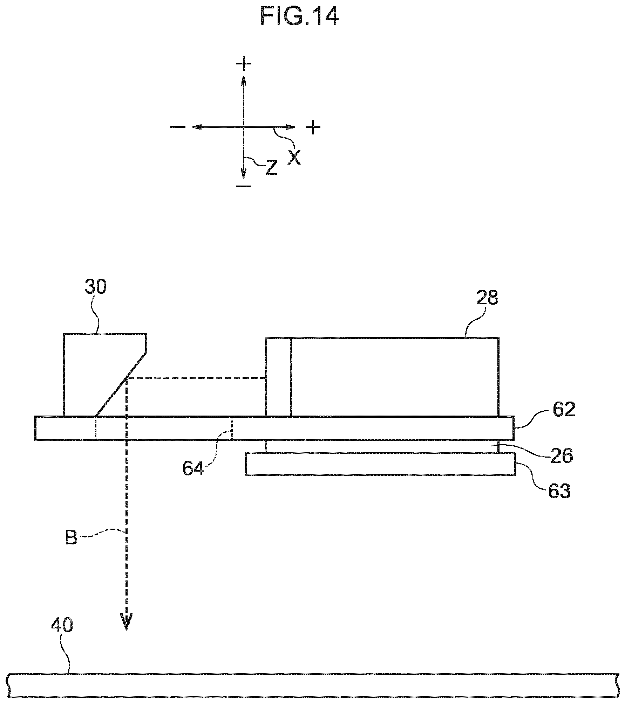

Since the second rotary member 63 is provided with the first rotary member 62 as illustrated in Fig. 13, a position of the second mirror 28 and a position of the focusing mirror 30 integrally change even in a case in which a position of the second mirror 28 changes to form the first inclination angle θ1 between the scanning direction and the X-axis direction. Thus, the surface of the electrical steel sheet 40 can be subjected to laser processing while suppressing the occurrence of focus blur as illustrated in Fig. 14, which is similar to the first modification. In the disclosure, the first mirror 26, the second mirror 28, and the focusing mirror 30 may be provided in the second rotary member 63 without providing the first rotary member 62.

In addition, a modification similar to the first embodiment described above may be adopted in the second embodiment.

[Third Embodiment] Next, a third embodiment in the disclosure will be described.

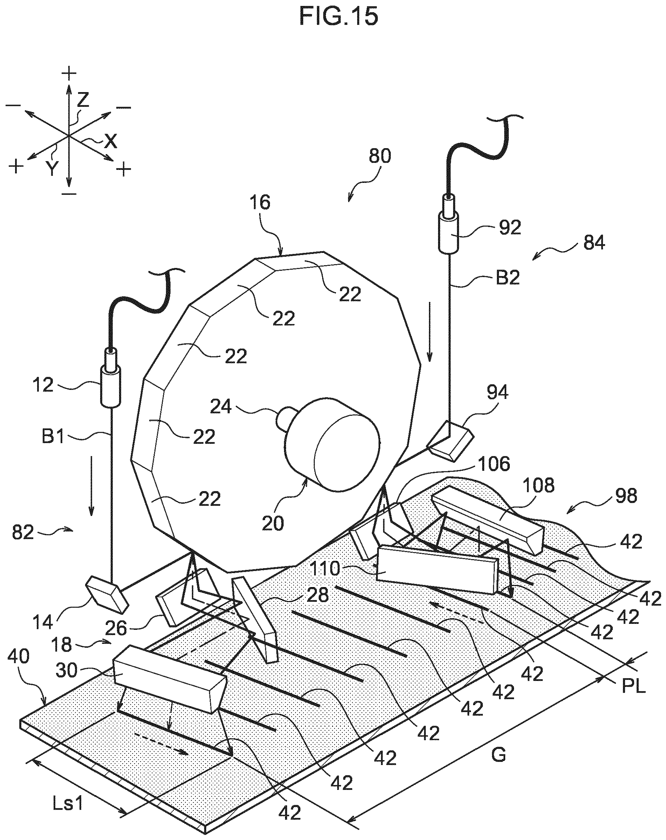

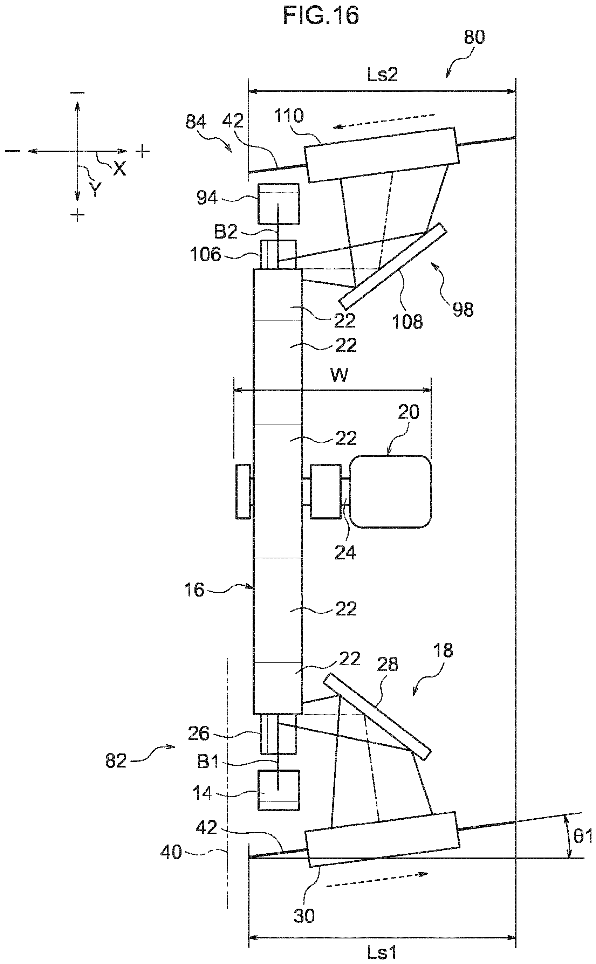

A laser scanning device 80 according to the third embodiment illustrated in Figs. 15 and 16 is different from the laser scanning device 60 according to the second embodiment illustrated in Figs. 5 and 6 in terms of the following configuration.

That is, the laser scanning device 80 according to the third embodiment includes a first laser scanning unit 82, a second laser scanning unit 84, a polygon mirror 16, and a motor 20. The first laser scanning unit 82 includes a laser beam output unit 12, a plane mirror 14, and an optical system 18. The laser beam output unit 12, the plane mirror 14, and the optical system 18 constituting the first laser scanning unit 82 have the same configurations as those of the second embodiment described above. In addition, the polygon mirror 16 and the motor 20 have the same configurations as those of the second embodiment described above. The laser beam output unit 12 outputs a first laser beam B1. The first laser beam B1 is irradiated to surface of an electrical steel sheet 40 via the plane mirror 14, the polygon mirror 16, and the optical system 18.

The second laser scanning unit 84 includes a laser beam output unit 92, a mirror 94, and an optical system 98. The optical system 98 includes a first mirror 106, a second mirror 108, and a focusing mirror 110. The laser beam output unit 92, the mirror 94, the first mirror 106, the second mirror 108, and the focusing mirror 110 are arranged at positions symmetrical with the laser beam output unit 12, the plane mirror 14, a first mirror 26, a second mirror 28, and a focusing mirror 30 in the Y-axis direction with respect to a rotation axis 24. For example, the laser beam output unit 92, the mirror 94, the first mirror 106, the second mirror 108, and the focusing mirror 110 have the same configurations as the laser beam output unit 12, the plane mirror 14, the first mirror 26, the second mirror 28, and the focusing mirror 30, respectively.

The laser beam output unit 92 outputs a second laser beam B2. The second laser beam B2 output from the laser beam output unit 92 is irradiated to the surface of the electrical steel sheet 40 via the mirror 94, the polygon mirror 96, and the optical system 98 similarly to the irradiation of the surface of the electrical steel sheet 40 with the first laser beam B1 output from the laser beam output unit 12 via the plane mirror 14, the polygon mirror 16, and the optical system 18. The second laser beam B2 is scanned in a direction opposite to that of the first laser beam B 1.

Orientations of the second mirror 108 and the focusing mirror 110 are set to orientations with which a scanning direction of the second laser beam B2 is parallel to a scanning direction of the first laser beam B1. In addition, positions of the second mirror 108 and the focusing mirror 110 are set to positions at which a position and a length in the X-axis direction of a processed portion 42 formed by the second laser beam B2 are the same as a position and a length in the X-axis direction of a processed portion 42 formed by the first laser beam B1. An effective scanning length Ls 1 of the first laser beam B1 and an effective scanning length Ls2 of the second laser beam B2 are the same.

In the laser scanning device 80 according to the third embodiment, an outer diameter of the polygon mirror 16 and/or an arrangement position of the optical system 18 are set such that the processed portion 42 formed by the second laser beam B2 is formed at the center between a plurality of the processed portions 42 formed by the first laser beams B1. That is, in a case in which a pitch of the plurality of processed portions 42 is denoted by PL, an interval between the processed portion 42 formed by the first laser beam B1 and the processed portion 42 formed by the second laser beam B2 is denoted by G, and n is an integer of 0 or more in the laser scanning device 80 according to the third embodiment, the following Formula (2) is satisfied.

$$G = (2n + 1) \times PL \cdots (2)$$

Furthermore, the laser scanning device 80 according to the third embodiment satisfies W < Ls1 = Ls2 in a relationship among a width W, the effective scanning length Ls1, and the effective scanning length Ls2 as illustrated in Fig. 16.

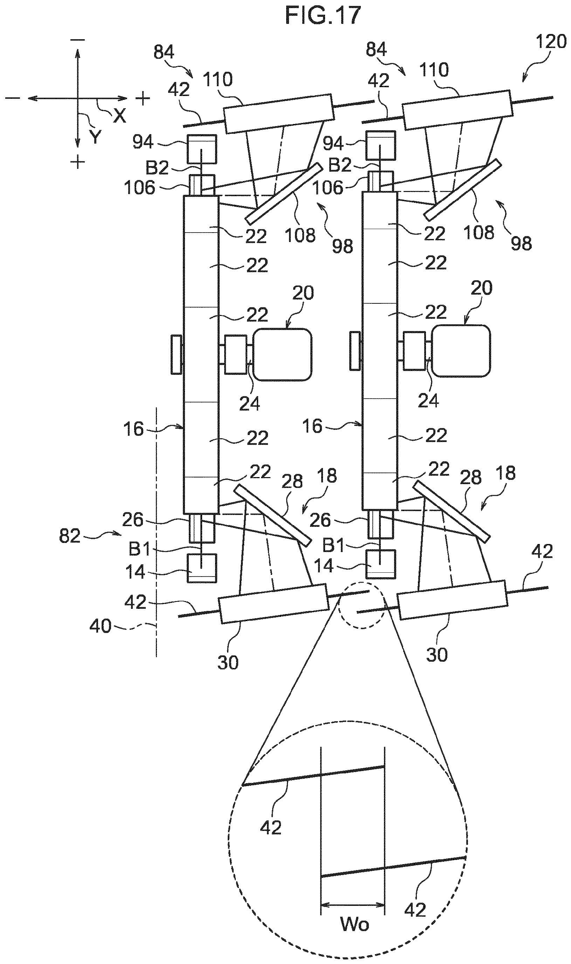

As illustrated in Fig. 17, a laser processing device 120 according to the third embodiment includes a plurality of the laser scanning devices 80. The plurality of laser scanning devices 80 are arranged side by side in the X-axis direction. Positions of the plurality of laser scanning devices 80 are set to positions where the processed portions 42 are formed to partially overlap each other in the X-axis direction by the adjacent laser scanning devices 80. An overlap length Wo corresponds to a length by which the processed portions 42 formed adjacent to each other in the X-axis direction partially overlap each other in the X-axis direction. Some of the processed portions 42 adjacent to each other in the X-axis direction are formed to be separated in the Y-axis direction.

Although Fig. 17 illustrates two laser scanning devices 80 as an example, the number of the plurality of laser scanning devices 80 included in the laser processing device 120 only needs to be two or more and may be any number.

A laser scanning method and a laser processing method according to the third embodiment are similar to the laser scanning method and the laser processing method according to the second embodiment described above except that the surface of the electrical steel sheet 40 is irradiated with the first laser beam B 1 and the second laser beam B2 by one laser scanning device 80, and the description thereof will be omitted.

(Functions and Effects of Third Embodiment)

Next, functions and effects of the third embodiment will be described regarding differences from those of the second embodiment.

In the laser scanning device 80 according to the third embodiment, the surface of the electrical steel sheet 40 is irradiated with the first laser beam B 1 and the second laser beam B2 on both the sides in the Y-axis direction with respect to the polygon mirror 16, the processed portions 42 can be formed on both the sides in the Y-axis direction with respect to the polygon mirror 16. Therefore, it is possible to improve the processing efficiency when the plurality of processed portions 42 are formed on the surface of the electrical steel sheet 40, for example, as compared with a case in which the processed portions 42 are formed on one side in the Y-axis direction with respect to the polygon mirror 16.

Since the processed portions 42 can be formed on both the sides in the Y-axis direction with respect to the polygon mirror 16 in the laser scanning device 80 according to the third embodiment, each of the pitch of the processed portion 42 formed by the first laser scanning unit 82 and the pitch of the processed portion 42 formed by the second laser scanning unit 84 can be increased as compared with a case in which the processed portions 42 are formed on one side in the Y-axis direction with respect to the polygon mirror 16 when the pitches of the processed portions 42 are made the same and compared. Therefore, the time required for forming one processed portion 42 can be increased, and thus, each of the effective scanning length Ls of the first laser beam B1 and the effective scanning length Ls of the second laser beam B2 can be increased. As a result, it is possible to improve the processing efficiency when the plurality of processed portions 42 are formed on the surface of the electrical steel sheet 40.

(Modification of Third Embodiment)

Next, a modification of the third embodiment in the disclosure will be described.

In the laser scanning device 80 according to the third embodiment, each of the first laser beam B1 and the second laser beam B2 is scanned in an inclination direction with respect to the X-axis direction, but each of the first laser beam B1 and the second laser beam B2 may be scanned in the X-axis direction similarly to the laser beam B of the first embodiment.

In addition, a modification similar to the first embodiment described above may be adopted in the third embodiment.

[Fourth Embodiment]

Next, a fourth embodiment in the disclosure will be described.

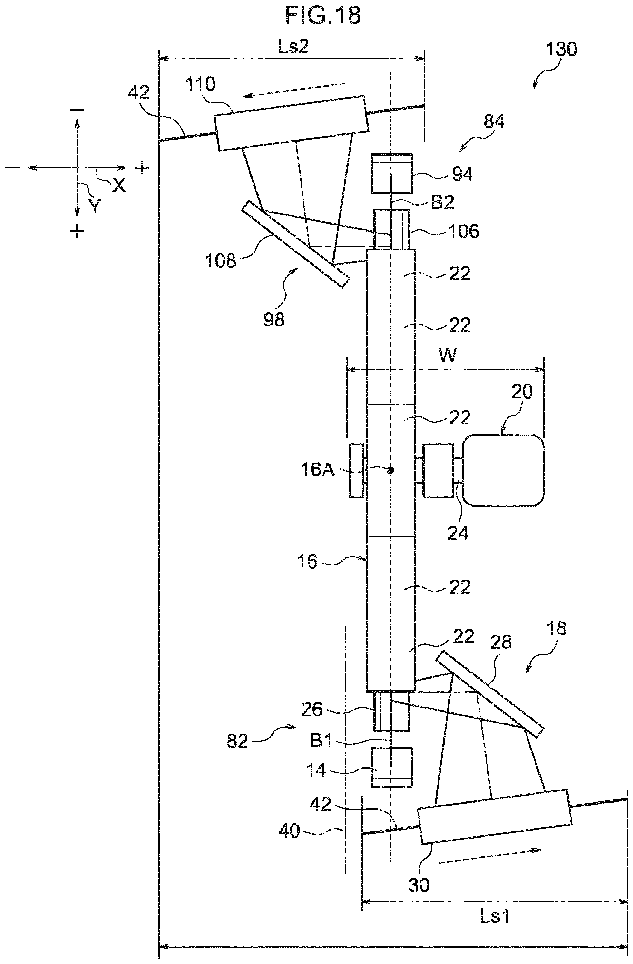

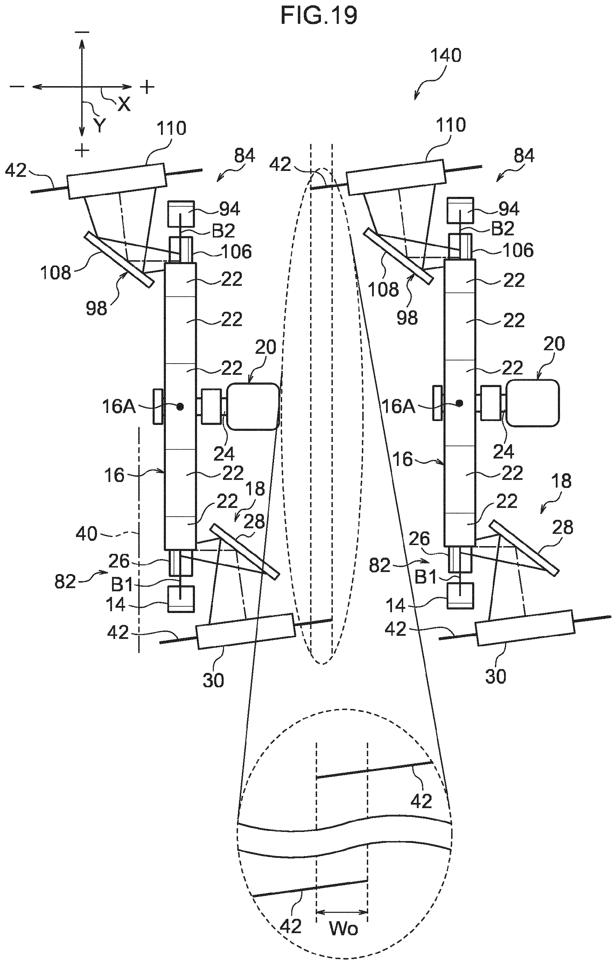

A laser scanning device 130 according to the fourth embodiment illustrated in Figs. 18 and 19 is different from the laser scanning device 80 according to the third embodiment illustrated in Figs. 15 and 16 in terms of the following configuration.

That is, in the laser scanning device 130 according to the fourth embodiment, a second laser scanning unit 84 is configured to be point-symmetrical with a first laser scanning unit 82 about a center point 16A of a polygon mirror 16 when viewed in the Z-axis direction. Specifically, a second mirror 28 and a focusing mirror 30 of the first laser scanning unit 82 are arranged on the positive side in the X-axis direction and the positive side in the Y-axis direction with respect to the polygon mirror 16, whereas a second mirror 108 and a focusing mirror 110 of the second laser scanning unit 84 are arranged on the negative side in the X-axis direction and the negative side in the Y-axis direction with respect to the polygon mirror 16. A second laser beam B2 is scanned in a direction opposite to that of a first laser beam B1.

In addition, orientations of the second mirror 108 and the focusing mirror 110 are set to orientations with which a scanning direction of the second laser beam B2 is parallel to a scanning direction of the first laser beam B1. Furthermore, positions of the second mirror 108 and the focusing mirror 110 are set to positions at which a length in the X-axis direction of a processed portion 42 formed by the second laser beam B2 is the same as a length in the X-axis direction of a processed portion 42 formed by the first laser beam B1. An effective scanning length Ls1 of the first laser beam B1 and an effective scanning length Ls2 of the second laser beam B2 are the same.

As illustrated in Fig. 19, a laser processing device 140 according to the fourth embodiment includes a plurality of the laser scanning devices 130. The plurality of laser scanning devices 130 are arranged side by side in the X-axis direction. Positions of the plurality of laser scanning devices 130 are set to positions where the processed portions 42 are formed to partially overlap each other in the X-axis direction by the adjacent laser scanning devices 130. An overlap length Wo corresponds to a length by which the processed portions 42 formed adjacent to each other in the X-axis direction partially overlap each other in the X-axis direction. Some of the processed portions 42 adjacent to each other in the X-axis direction are formed to be separated in the Y-axis direction.

The laser scanning device 130 according to the fourth embodiment satisfies $W < Ls1 + Ls2 - Wo$ in a relationship among a width W, an effective scanning length Ls1 of the first laser beam B1, an effective scanning length Ls2 of the second laser beam B2, and an overlap length Wo.

Although Fig. 19 illustrates two laser scanning devices 130 as an example, the number of the plurality of laser scanning devices 130 included in the laser processing device 140 only needs to be two or more and may be any number.

A laser scanning method and a laser processing method according to the fourth embodiment are similar to the laser scanning method and the laser processing method according to the third embodiment described above except that the second laser scanning unit 84 is configured to be point-symmetrical with the first laser scanning unit 82 so that a position of the processed portion 42 formed by the second laser beam B2 is point-symmetrical with a position of the processed portion 42 formed by the first laser beam B1, and the description thereof will be omitted.

(Functions and Effects of Fourth Embodiment)

Next, functions and effects of the fourth embodiment will be described regarding differences from those of the third embodiment.

In the laser scanning device 130 according to the fourth embodiment, the surface of the electrical steel sheet 40 is irradiated with the first laser beam B1 and the second laser beam B2 on both the sides in the X-axis direction with respect to the polygon mirror 16, the processed portions 42 can be formed on both the sides in the X-axis direction with respect to the polygon mirror 16. Therefore, the processed portion 42 can be formed in a wide range in the X-axis direction by one laser scanning device 10, for example, as compared with a case in which the processed portion 42 is formed on one side in the X-axis direction with respect to the polygon mirror 16.

Since the processed portion 42 can be formed on both the sides in the X-axis direction with respect to the polygon mirror 16 in the laser scanning device 130 according to the fourth embodiment, the laser scanning device 130 can be downsized as compared with a case in which the processed portion 42 is formed on one side in the X-axis direction with respect to the polygon mirror 16 by one laser scanning device 130 when lengths of the processed portions 42 formed by one laser scanning device 130 are made the same and compared.

(Modification of Fourth Embodiment)

Next, a modification of the fourth embodiment in the disclosure will be described.

In the laser scanning device 130 according to the fourth embodiment, each of the first laser beam B 1 and the second laser beam B2 is scanned in an inclination direction with respect to the X-axis direction, but each of the first laser beam B 1 and the second laser beam B2 may be scanned in the X-axis direction similarly to the laser beam B of the first embodiment.

In addition, a modification similar to the first embodiment described above may be adopted in the fourth embodiment.

Although the first to fourth embodiments in the disclosure have been described above, the disclosure is not limited to the description. It is needless to say that various modifications can be made within a scope not departing from a gist of the disclosure.

«Supplementary Notes»

From the present specification, the following aspects are conceptualized.

That is, Aspect 1 is a laser scanning device that scans a surface of an object with a laser beam, the laser scanning device including:

> a laser beam output unit which irradiates the laser beam;
> a polygon mirror which has a polygonal shape including a top surface and a bottom surface that are polygonal, in which at least any one surface excluding the top surface and the bottom surface is formed as a mirror, which rotates about an axis serving as a rotation axis and penetrating the top surface and the bottom surface, and which causes the laser beam irradiated from the laser beam output unit to be reflected at the mirror; and
> an optical system which guides the laser beam reflected at the polygon mirror to the surface of the object,
> in which the rotation axis of the polygon mirror is parallel to the surface of the object and substantially parallel to a direction in which the laser beam is scanned.

Aspect 2 is the laser scanning device according to Aspect 1, in which,
in a case in which:

> an effective scanning length Ls is defined as a beam diameter of the laser beam reflected at the polygon mirror at a time of reaching the object, the beam diameter moving along a direction of the rotation axis of the polygon mirror on the surface of the object, during a period between a beam diameter of the laser beam irradiated from the laser beam output unit at a time of reaching the mirror formed on the polygon mirror coming into contact with one edge of the mirror until coming into contact with another edge of the mirror as the polygon mirror rotates, and
a width of the laser scanning device along the direction of the rotation axis of the polygon mirror is denoted by W,

$$W < Ls.$$

Aspect 3 is the laser scanning device according to Aspect 1 or 2, in which
the optical system includes:

> a reflecting mirror that reflects the laser beam reflected at the polygon mirror to change a scanning direction of the laser beam;
> a focusing mirror that reflects the laser beam to the object, the laser beam being reflected at the reflecting mirror; and
> a rotary member that supports the reflecting mirror and the focusing mirror and rotates along a plane including an optical path of the laser beam between the reflecting mirror and the focusing mirror.

Aspect 4 is a laser scanning method of scanning a surface of an object with a laser beam, the laser scanning method including:

> a laser beam output step of irradiating the laser beam using a laser beam output unit;
> a reflection step of reflecting the laser beam irradiated from the laser beam output unit at a mirror using a polygon mirror which has a polygonal shape including a top surface and a bottom surface that are polygonal, in which at least any one surface excluding the top surface and the bottom surface is formed as the mirror, and which rotates about an axis serving as a rotation axis and penetrating the top surface and the bottom surface; and
> a light guiding step of guiding the laser beam reflected at the polygon mirror to the surface of the object using an optical system,
> in which the rotation axis of the polygon mirror is parallel to the surface of the object and substantially parallel to a direction in which the laser beam is scanned.

Aspect 5 is a laser processing device including a plurality of the laser scanning devices according to Aspect 1 arranged side by side in a sheet width direction of an electrical steel sheet or a steel sheet formed on the electrical steel sheet such that a surface of the electrical steel sheet or the steel sheet formed on the electrical steel sheet is scanned and processed with the laser beam.

Aspect 6 is an electrical steel sheet manufacturing method including:

> arranging a plurality of the laser scanning devices according to Aspect 1 side by side in a sheet width direction of an electrical steel sheet or a steel sheet formed on the electrical steel sheet; and
> scanning and processing a surface of the electrical steel sheet or the steel sheet formed on the electrical steel sheet with the laser beam.

<<Other Aspects>>

In addition, the following other aspects are conceptualized from the present specification.

That is, another Aspect 1 is a laser scanning device that scans a surface of an object with a laser beam, the laser scanning device including:

> a laser beam output unit which irradiates the laser beam;
> a polygon mirror which has a polygonal shape including an upper surface and a lower surface that are polygonal, in which at least any one surface excluding the upper surface and the lower surface is formed as a mirror, which rotates about an axis serving as a rotation axis and penetrating the upper surface and the lower surface, and which causes the laser beam irradiated from the laser beam output unit to be reflected at the mirror; and
> an optical system which guides the laser beam reflected at the polygon mirror to the surface of the object,
> in which the rotation axis of the polygon mirror is parallel to the surface of the object and substantially parallel to a direction in which the laser beam is scanned.

Another Aspect 2 is the laser scanning device according to another Aspect 1, in which, in a case in which:

> an effective scanning length Ls is defined as a beam diameter of the laser beam reflected at the polygon mirror at a time of reaching the object, the beam diameter moving along a direction of the rotation axis of the polygon mirror on the surface of the object, during a period between a beam diameter of the laser beam irradiated from the laser beam output unit at a time of reaching the mirror formed on the polygon mirror coming into contact with one edge of the mirror and then coming into contact with another edge of the mirror as the polygon mirror rotates, and
> a width of the laser scanning device along the direction of the rotation axis of the polygon mirror is denoted by W,

$$W < Ls.$$

Another Aspect 3 is a laser scanning method of scanning a surface of an object with a laser beam, the laser scanning method including:

> a laser beam output step of irradiating the laser beam using a laser beam output unit;
> a reflection step of reflecting the laser beam irradiated from the laser beam output unit at a mirror using a polygon mirror which has a polygonal shape including an upper surface and a lower surface that are polygonal, in which at least any one surface excluding the upper surface and the lower surface is formed as the mirror, and which rotates about an axis serving as a rotation axis and penetrating the upper surface and the lower surface; and
> a light guiding step of guiding the laser beam reflected at the polygon mirror to the surface of the object using an optical system,
> in which the rotation axis of the polygon mirror is parallel to the surface of the object and substantially parallel to a direction in which the laser beam is scanned.

Another Aspect 4 is a laser processing device including
a plurality of the laser scanning devices according to another Aspect 1 arranged side by side in a sheet width direction of an electrical steel sheet or a steel sheet formed on the electrical steel sheet such that a surface of the electrical steel sheet or the steel sheet formed on the electrical steel sheet is scanned and processed with the laser beam.

Another Aspect 5 is an electrical steel sheet manufacturing method including:

> arranging a plurality of the laser scanning devices according to another Aspect 1 side by side in a sheet width direction of an electrical steel sheet or a steel sheet formed on the electrical steel sheet; and
> scanning and processing a surface of the electrical steel sheet or the steel sheet formed on the electrical steel sheet with the laser beam.

According to other aspects, it is possible to reduce the width occupied by the laser scanning device as compared with the conventional laser scanning device exemplified by the laser scanning device or the like in which the rotation plane of the polygon mirror is substantially parallel to the surface of the object.

The disclosure of Japanese Patent Application No. 2021-058353 filed on March 30, 2021 is incorporated herein by reference in its entirety.

In addition, all cited documents, patent applications, and technical standards mentioned in the present specification are incorporated by reference in the present specification to the same extent as if the individual cited document, patent application, or technical standard was specifically and individually indicated to be incorporated by reference.

| 10 | Laser scanning device |
| 12 | Laser beam output unit |
| 14 | Plane mirror |
| 16 | Polygon mirror |
| 18 | Optical system |
| 20 | Motor |
| 22 | Mirror surface |
| 24 | Rotation axis |
| 26 | First mirror |
| 28 | Second mirror |
| 30 | Focusing mirror |
| 40 | Electrical steel sheet |
| 42 | Processed portion |
| 50 | Laser processing device |
| 60 | Laser scanning device |
| 62 | First rotary member |
| 63 | Second rotary member |
| 64 | Hole |
| 70 | Laser processing device |
| 80 | Laser scanning device |
| 82 | First laser scanning unit |
| 84 | Second laser scanning unit |
| 92 | Laser beam output unit |
| 94 | Mirror |
| 96 | Polygon mirror |
| 98 | Optical system |
| 106 | First mirror |
| 108 | Second mirror |
| 110 | Focusing mirror |
| 120 | Laser processing device |
| 130 | Laser scanning device |
| 140 | Laser processing device |
| B | Laser beam |
| B1 | First laser beam |
| B2 | Second laser beam |

**Claims**

1. A laser scanning device that scans a surface of an object with a laser beam, the laser scanning device comprising:

   a laser beam output unit which irradiates the laser beam;
   a polygon mirror which has a prismatic shape including a top surface and a bottom surface that are polygonal, in which at least any one surface excluding the top surface and the bottom surface is formed as a mirror, which rotates about an axis serving as a rotation axis and penetrating the top surface and the bottom surface, and which causes the laser beam irradiated from the laser beam output unit to be reflected at the mirror; and
an optical system which guides the laser beam reflected at the polygon mirror to the surface of the object,
wherein the rotation axis of the polygon mirror is parallel to the surface of the object and substantially parallel to a direction in which the laser beam is scanned.

2. The laser scanning device according to claim 1, wherein, in a case in which:

   an effective scanning length Ls is defined as a beam diameter of the laser beam reflected at the polygon mirror at a time of reaching the object, the beam diameter moving along a direction of the rotation axis of the polygon mirror on the surface of the object, during a period between a beam diameter of the laser beam irradiated from the laser beam output unit at a time of reaching the mirror formed on the polygon mirror coming into contact with one edge of the mirror until coming into contact with another edge of the mirror as the polygon mirror rotates, and
   a width of the laser scanning device along the direction of the rotation axis of the polygon mirror is denoted by W,

$$W < Ls.$$

3. The laser scanning device according to claim 1 or 2, wherein the optical system includes:

   a reflecting mirror that reflects the laser beam reflected at the polygon mirror to change a scanning direction of the laser beam;
   a focusing mirror that reflects the laser beam to the object, the laser beam being reflected at the reflecting mirror; and
   a rotary member that supports the reflecting mirror and the focusing mirror and rotates along a plane including an optical path of the laser beam between the reflecting mirror and the focusing mirror.

4. A laser scanning method of scanning a surface of an object with a laser beam, the laser scanning method comprising:

   a laser beam output step of irradiating the laser beam using a laser beam output unit;
   a reflection step of reflecting the laser beam irradiated from the laser beam output unit at a mirror using a polygon mirror which has a polygonal shape including a top surface and a bottom surface that are polygonal, in which at least any one surface excluding the top surface and the bottom surface is formed as the mirror, and which rotates about an axis serving as a rotation axis and penetrating the top surface and the bottom surface; and

a light guiding step of guiding the laser beam reflected at the polygon mirror to the surface of the object using an optical system,

wherein the rotation axis of the polygon mirror is parallel to the surface of the object and substantially parallel to a direction in which the laser beam is scanned.

5. A laser processing device, comprising:
   a plurality of the laser scanning devices according to claim 1 arranged side by side in a sheet width direction of an electrical steel sheet or a steel sheet formed on the electrical steel sheet, such that a surface of the electrical steel sheet or the steel sheet formed on the electrical steel sheet is scanned and processed with the laser beam.

6. An electrical steel sheet manufacturing method, comprising:

   arranging a plurality of the laser scanning devices according to claim 1 side by side in a sheet width direction of an electrical steel sheet or a steel sheet formed on the electrical steel sheet; and

   scanning and processing a surface of the electrical steel sheet or the steel sheet formed on the electrical steel sheet with the laser beam.

FIG.1

# FIG.2

# FIG.3

FIG.4

# FIG.5

# FIG.6

# FIG.7

# FIG.8

FIG.9

# FIG.10

# FIG.11

FIG.12

# FIG.13

# FIG.14

# FIG.15

## FIG.16

# FIG.17

## FIG.18

# FIG.19

# FIG.20

# FIG.21

# FIG.22

# FIG.23

# FIG.24

## INTERNATIONAL SEARCH REPORT

| | |
|---|---|
| International application No. | |
| | **PCT/JP2022/016369** |

**A. CLASSIFICATION OF SUBJECT MATTER**

*G02B 26/12*(2006.01)i; *B23K 26/082*(2014.01)i; *B23K 26/364*(2014.01)i; *G02B 26/10*(2006.01)i
FI: G02B26/12; B23K26/082; B23K26/364; G02B26/10 F

According to International Patent Classification (IPC) or to both national classification and IPC

**B. FIELDS SEARCHED**

Minimum documentation searched (classification system followed by classification symbols)

G02B26/00-26/12,B23K26/00-26/70,C21D8/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 03/103887 A1 (MLT MICRO LASER TECHNOLOGY GMBH) 18 December 2003 (2003-12-18) | 1, 2, 4 |
| | p. 1, line 1 to p. 16, line 14, fig. 1-4 | |
| Y | p. 1, line 1 to p. 16, line 14, fig. 1-4 | 3, 5, 6 |
| X | CN 101804518 A (SUZHOU BOHAI LASER TECHNOLOGY CO LTD) 18 August 2010 (2010-08-18) | 1, 2, 4 |
| | paragraphs [0009]-[0046], fig. 1, 2 | |
| Y | paragraphs [0009]-[0046], fig. 1, 2 | 3, 5, 6 |
| Y | JP 2001-62577 A (TOPPAN FORMS CO LTD) 13 March 2001 (2001-03-13) | 3 |
| | paragraphs [0012]-[0022], fig. 1 | |
| Y | JP 2004-191863 A (RICOH CO LTD) 08 July 2004 (2004-07-08) | 5, 6 |
| | paragraphs [0040]-[0044], [0055]-[0057], fig. 5, 10 | |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/016369**

| Patent document cited in search report | | | Publication date (day/month/year) | Patent family member(s) | | | Publication date (day/month/year) |
|---|---|---|---|---|---|---|---|
| WO | 03/103887 | A1 | 18 December 2003 | DE | 10225387 | A1 | |
| | | | | AU | 2003229661 | A1 | |
| CN | 101804518 | A | 18 August 2010 | (Family: none) | | | |
| JP | 2001-62577 | A | 13 March 2001 | (Family: none) | | | |
| JP | 2004-191863 | A | 08 July 2004 | (Family: none) | | | |

Form PCT/ISA/210 (patent family annex) (January 2015)

**REFERENCES CITED IN THE DESCRIPTION**

**Patent documents cited in the description**

- JP 2018507111 A

- JP 2021058353 A